# EUROPEAN PATENT SPECIFICATION

(11) **EP 4 387 301 B1**
(45) Date of publication and mention of the grant of the patent: **19.03.2025**
(21) Application number: 22212872.0
(22) Date of filing: 12.12.2022
(51) Int. Cl.: H04W 12/0431, H04W 12/30, H04W 12/69, H04W 12/00

(54) **METHOD FOR ESTABLISHING A NON-ACCESS STRATUM COMMUNICATION LINK BETWEEN A USER EQUIPMENT AND ONE OF A PLURALITY OF NETWORK FUNCTIONS OR SERVICES OF A TELECOMMUNICATIONS NETWORK, USER EQUIPMENT, SYSTEM OR TELECOMMUNICATIONS NETWORK, USER EQUIPMENT BOOTSTRAPPING FUNCTION OR SERVICE, PROGRAM AND COMPUTER PROGRAM PRODUCT**
VERFAHREN ZUM AUFBAU EINER NON-ACCESS-STRATUM-KOMMUNIKATIONSVERBINDUNG
RÉSEAU, SYSTÈME OU RÉSEAU DE TÉLÉCOMMUNICATION, FONCTION OU SERVICE D'AMORÇAGE D'ÉQUIPEMENT UTILISATEUR

(43) Date of publication of application: 19.06.2024
(73) Proprietor: Deutsche Telekom AG, 53113 Bonn (DE)
(72) Inventor: COLOM IKUNO, Josep, 2100 Korneuburg (AT)
(74) Representative: Schwöbel, Thilo K.

(56) References cited:
- US-A1- 2019 387 407
- "3rd Generation Partnership Project; Technical Specification Group Services and System Aspects; System architecture for the 5G System (5GS); Stage 2 (Release 17)", vol. SA WG2, no. V17.2.0, 24 September 2021 (2021-09-24), pages 1 - 542, XP052056728, Retrieved from the Internet <URL:http://ftp.3gpp.org> [retrieved on 20210924]

## Description

### BACKGROUND

The present invention relates a method for establishing a non-access stratum communication link between a user equipment and one of a plurality of network functions or services of a telecommunications network, wherein the non-access stratum communication link involves establishing a non-access stratum security context between the user equipment and the one of the plurality of network functions or services.

Furthermore, the present invention relates to a user equipment for establishing a non-access stratum communication link between the user equipment and one of a plurality of network functions or services of a telecommunications network, wherein the non-access stratum communication link involves establishing a non-access stratum security context between the user equipment and the one of the plurality of network functions or services.

Additionally, the present invention relates to a system or telecommunications network for establishing a non-access stratum communication link between a user equipment and one of a plurality of network functions or services of the telecommunications network, wherein the non-access stratum communication link involves establishing a non-access stratum security context between the user equipment and the one of the plurality of network functions or services.

Furthermore, the present invention relates to a user equipment bootstrapping function or service, especially as part of a system or a telecommunications network according to the present invention, for establishing a non-access stratum communication link between a user equipment and one of a plurality of network functions or services of the telecommunications network, wherein the non-access stratum communication link involves establishing a non-access stratum security context between the user equipment and the one of the plurality of network functions or services.

Furthermore, the present invention relates to a program and to a computer-readable medium for establishing, according to the inventive method, a non-access stratum communication link between a user equipment and one of a plurality of network functions or services of a telecommunications network.

In conventionally known telecommunications networks, the interface used between the user equipment, going via the access network (such as a radio access network, RAN), on the one hand, and the core network (CN), is based on the non-access stratum protocol stack, or NAS protocol stack. From a system architecture perspective, NAS communication refers to the logical interface between the user equipment and the CN.
In the example of a mobile communication network - especially a mobile communication network according to the 5G standard -, the non-access stratum protocol, typically a non-access stratum mobility management protocol, NAS-MM, is, e.g., transported on top of the NG-AP protocol stack (gNB-5G core application protocol stack), the NG-AP protocol stack typically comprising the NG-AP on top of an L1 layer (physical layer), an L2 layer (data link layer), an IP (internet protocol) layer, and an SCTP (stream control transmission protocol) layer, thereby, e.g. realizing the N2 interface, or N2-reference point, between the 5G access network and the access and mobility management function (AMF) network function or service of the core (5G) core network. The NG-AP protocol stack (NG-AP being a 3GPP protocol defined in TS 38.413) is used to transport control plane (CP) information between a user equipment and the core network between the radio access network and the access and mobility function (AMF). In the considered case, the (radio) access network acts as a relay for the non-access stratum signaling (NAS-MM) - between the 5G access network protocol layer (used between the user equipment and a station entity, especially a gNodeB) and the NG-AP protocol stack which is transported to the AMF using NG-AP as lower protocol layer -, and the (radio) access network (AN) has no access to (the content of) the non-access stratum information (i.e. the NAS-MM communication); it just relays the information to the access and mobility management function (AMF), i.e. the so-called non-access stratum security context is terminated at the access and mobility management function (AMF). In conventionally known telecommunications networks, the (radio) access network determines the AMF network function or service (out of, potentially, a plurality of different (instances of) AMF network functions or services within a telecommunications network) with which to communicate with based on configuration; typically, based on the requested telecommunications network (especially a public land mobile network, PLMN) and a network slice (or network slices), the (radio) access network routes a given registration request (being transmitted by a user equipment) to one AMF network function or service, or, potentially, one out of a list of possible AMFs.

In conventionally known telecommunications networks, the non-access stratum communication relates to control plane information exchanged between the UE and CN elements or network nodes of the core network: E.g., in the case of a 5G system, that includes communication between the user equipment and a plurality of different network function functionalities, such as, e.g., AMF (for access and mobility), SMF (for session management), PCF (for policy information), and LMF (for location information). Thereby, the access and mobility management function serves as a central element for the non-access stratum communication between the user equipment and the (other kinds of) network functions or services of the core network (i.e. the different network function functionalities), and the (non-access stratum) communication of the user equipment towards other network function functionalities (i.e. network functions or services other than the access and mobility management function) is realized by a mixture of using, on the one hand, non-access stratum protocol for the transport between the radio access network and the access and mobility management function, and, on the other hand, Nxxx service based communication (e.g. N11/Nsmf towards NAS-SM of the session management function, N20/Nsmsf towards the short message service function, N15/Npcf towards UE policy of the policy and charging function, or NL1/Nlmf towards the location management function) between the access and mobility management function and the other kinds of network functions or services (or network function functionalities).

Regarding security in conventionally known telecommunications networks, when the user equipment registers with the telecommunications network, a non-access stratum security context is created. The security context applies to the non-access stratum connection, i.e. between the user equipment and the access and mobility management function; this means that Information sent via the access and mobility management function (e.g. towards the session management function, etc.) is visible to the access and mobility management function. This is a drawback in case that it cannot be assured (or that it is not strived for to assure) that all components or network functions or services of a core network are part of a trusted domain; the same drawback applies to roaming with regard to the home and/or visited networks. This is a result of the current architecture where a single control plane towards the core network is established, i.e. NAS communication, especially the NAS security context, is terminated at the AMF. The document US 2019/387407, 19th December 2019 (2019-12-19), describes the establishment of a security context between the UE and the (target) AMF when the UE moves from EPS coverage to 5G coverage and applies the Tracking Area Update (TAU) procedure.

### SUMMARY

An object of the present invention is to provide a technically simple, effective and cost effective solution for establishing a non-access stratum communication link between a user equipment and one of a plurality of network functions or services of a telecommunications network in a flexible manner, especially regarding network architecture aspects, and permitting a higher level of user privacy and user data privacy when operating a user equipment connected to the telecommunications network, wherein the non-access stratum communication link involves establishing a non-access stratum security context between the user equipment and the one of the plurality of network functions or services. A further object of the present invention is to provide a corresponding user equipment, a corresponding system or telecommunications network, a corresponding user equipment bootstrapping function or service, and a corresponding program and computer-readable medium.

The object of the present invention is achieved by a method according to claim 1.
It is furthermore advantageously possible according to the present invention that the user equipment includes additional information the bootstrapping function can use to steer the third step, or the telecommunications network can use to forward the message in the first step towards the bootstrapping function, such as capabilities of the user equipment, subscriber-related information, security-related information such as a public key or certificate.

According to the present invention, it is advantageously possible that a higher level of security and/or trust is able to be realized within a core network of a telecommunications network, as - by means of using the non-access stratum endpoint information - a direct non-access stratum communication link, including a non-access stratum security context and/or including conducting authentication of the user equipment with regard to the respective endpoint of the non-access stratum security context (i.e. either to the specific network function or service, or the specified network function or service corresponding to the specific kind of network function functionality), is realized, leading to the possibility to realize a zero trust architecture. This is in contrast to the conventional architecture of such non-access stratum communication links that, typically, rely on a non-access stratum security context being established primarily between the user equipment and the access and mobility management function, and wherein the security context or the trust relationship towards other network functions or services or network nodes (i.e. other than the access and mobility management function) relies purely on the assumption that, the core network of the telecommunications network is considered a trusted domain and trust between network elements within such trusted domain is provided on a hop-by-hop basis only.
It is furthermore advantageously possible according to the present invention that - instead of using only one network function or service, especially only or principally the access and mobility management function, as the principal trusted termination of the non-access stratum security context - the user equipment, transparently via the (radio) access network, maintains a non-access stratum security context with multiple network functions or services (or other entities) of the core network for different purposes, i.e. maintains multiple non-access stratum security contexts.
Especially, this advantageously provides the possibility that network functions or services, as part of the core network of the telecommunications network, are able to be placed in different trust domains, i.e. it is not necessary any more to place these network functions or services in the same trust domain, potentially reducing complexity within the core network and, hence, leading potentially to a higher security and trust level within the telecommunications network (especially as less complexity is typically less error-prone, especially regarding configuration errors).
Additionally, it is advantageously possible according to the present invention that the user equipment is able to be aware of the network functions or services it is communicating with as there is a direct and authenticated communication or connection between the user equipment and those different network functions or services - especially network functions or services being able to provide different kinds of network function functionalities - instead of implicitly trusting the next hop. Allowing a zero-trust architecture provides the possibility of more decentralized and flexible deployments, e.g. deploying certain network functions or services in public clouds or in environments within less trusted environments (e.g. customer premise); this is not possible within conventionally known telecommunications networks, as with the current approach, a core network deployment, especially 5G core network deployment, assumes a trust domain, and if this is not guaranteed, a "supposedly trusted network function or service" could do whatever it wants with messages it receives and other elements, including the user equipment, will not be aware of such behavior.
It is furthermore advantageously possible according to the present invention that current non-access stratum protocols and the core network architecture is able to be reused (although other protocols, such as HTTP/2 could also be used for communication between the user equipment and the core network).

According to the present invention, the telecommunications network - especially its core network - comprises a user equipment bootstrapping function or service, or, at least, a user equipment bootstrapping function or service is accessible via the telecommunications network, especially its core network, or via a network node thereof. Thereby, it is furthermore advantageously possible that the non-access stratum communication link - and the non-access stratum security context - is established using or involving the user equipment bootstrapping function or service by means of the user equipment bootstrapping function or service providing, in the second step of the inventive method, a non-access stratum endpoint information regarding the endpoint of the non-access stratum communication link (and the non-access stratum security context) to be established, this endpoint of the non-access stratum communication link to establish either corresponding to the specific network function or service that the user equipment initially (i.e. in the first step of the inventive method) explicitly requested to be connected to, or to a specified network function or service corresponding to the specific kind of network function functionality (i.e. the specific instance (typically chosen by the access network, especially by the user equipment bootstrapping function or service) of the requested kind of network function functionality) that the user equipment initially, i.e. in the first step of the inventive method, explicitly requested to be connected to. It is thereby advantageously possible according to the present invention to provide a solution to the question which network function or service (or which instance of potentially a plurality of network functions or services) to choose for a given user equipment request: Given that the (radio) access network must route control plane messages from the user equipment to the core network, how can the (radio) access network route the control plane messages towards the right (instance of) network function or service? Typically, a user equipment is not (or is not able to be) associated with more than one control plane network functions or services for a given subscription, and especially not dynamically assigned; hence, there is a need for an instance taking this decision and providing this information.

Hence, the method according to the present invention advantageously provides the establishment of a non-access stratum communication link between a user equipment and an instance of a network function or service - especially a direct (or end-to-end) non-access stratum communication link between the user equipment and the instance of a network function or service. Typically, the telecommunications network comprises a plurality of network functions or services, and these network functions or services are able to provide different kinds of network function functionalities - within the telecommunications network, but also to, or towards, the user equipment. According to the present invention, the establishment of a non-access stratum communication link between the user equipment and a specific or specified network function or service also involves establishing a non-access stratum security context between the user equipment and the corresponding specific or specified network function or service, this non-access stratum security context corresponding to the non-access stratum communication link. According to the present invention, the establishment of the non-access stratum communication link involves using the user equipment bootstrapping function or service of the telecommunications network or accessible via the telecommunications network or via a network node thereof. According to the inventive method, and regarding a considered non-access stratum communication link, in a first step, the user equipment requests the considered non-access stratum communication link to be established, the considered non-access stratum communication link involving a specific network function or service or a specific kind of network function functionality; in a second step, the user equipment bootstrapping function or service provides a non-access stratum endpoint information regarding the request of the user equipment: In case that the user equipment request refers to the specific network function or service, i.e. a network function or service specifically defined by the user equipment's request, the non-access stratum endpoint information is able to be provided by the user equipment bootstrapping function or service; otherwise, in case that the user equipment only refers to a specific kind of network function functionality (i.e. not to a network function or service specifically defined by the user equipment's request) the user equipment bootstrapping function or service provides the non-access stratum endpoint information regarding a specified network function or service corresponding to the specific kind of network function functionality. In a third step, the non-access stratum endpoint information is used to establish the considered non-access stratum security context and/or to conduct authentication of the user equipment with regard to either the specific network function or service, or the specified network function or service corresponding to the specific kind of network function functionality.

In conventionally known telecommunications networks as well as according to the present invention, the non-access stratum communication relates to control plane information exchanged between the user equipment and the core network or network nodes of the core network, wherein such network functions or services include different network function functionalities, such as e.g., at least in case of a 5G system, an access and mobility management function (for access and mobility), a session management function (for session management), a policy and charging function (for policy information), and a location management function (for location information).
Furthermore in conventionally known telecommunications networks as well as according to the present invention, the question which one or which ones (or which instance(s)) of the different kinds of network functions or services (such as SMF, SMSF, PCF, LMF, etc.) actually serve(s) a given user equipment (that has initiated, e.g., by means of a request, the non-access stratum communication) at a given time is decided by the telecommunications network based on, or dependent on, at least one of the following: the service(s) requested by the user equipment, subscription parameters, network deployment and other parameters. The (radio) access network and/or the user equipment typically do not decide specifically which instance of a plurality of different SMF/SMSF/PCF/LMF instances (i.e. kinds of network functions or services other than the access and mobility management function) serves a user equipment (e.g. based on a given PDU session (protocol data unit session) establishment request of the user equipment, or a user equipment policy message, or a location-related message), whereas the (radio) access network has a saying regarding only which access and mobility management function instance a user equipment network registration is routed to (although the receiving access and mobility management function instance is able to tell the (radio) access network to redirect the request to another access and mobility management function instance). The non-access stratum interface is terminated at the access and mobility management function, and as such, there is no visibility outside of the core network how non-access stratum messages are forwarded, routed, or otherwise processed.

However, in conventional telecommunications networks, the access and mobility management function serves as the one central element for the non-access stratum communication between the user equipment and the (other kinds of) network functions or services of the core network; e.g., for the session management (function) communication between the user equipment and the session management function, the access and mobility management function performs a similar - only, or at least predominantly, forwarding - functionality, as mentioned previously regarding the (radio) access network: In a manner comparable to the (radio) access network just relaying the information (of the NAS-MM communication) to the access and mobility management function (AMF), the access and mobility management function performs - in a conventional telecommunications network - a transport or a relaying of the non-access stratum message containers to and from the session management function, with the security context being terminated at the access and mobility function, typically via the service-based interface and corresponding SBI n1-n2-messages requests. In such a scenario (i.e. the communication between the user equipment and the session management function via the access and mobility management function), the service-based interfaces (SBI) (between the access and mobility management function and the session management function) use the HTTP/2 protocol with JSON as the application layer serialization protocol; furthermore, the protocol stack comprises - on top of the L2 layer - the IP layer, the transport control protocol (TCP) layer, the transport layer security (TLS) layer, the HTTP/2 layer and the application layer, and additionally, regarding security protection at the transport layer, all 3GPP core network functions or services support SBI; authorization is typically supported by means of OAuth2, which allows network functions or services to be authorized for given network function service(s) via the network repository function (NRF) (i.e. obtain a token providing a specific level of authorization to the API that a specific network function service exposes); however, static authorization is also possible. The same applies to all the different N1 message classes (5GMM (the whole NAS message as received (for e.g. used in forwarding the Registration message to target AMF during Registration procedure with AMF redirection)), SM (N1 Session Management message), LPP (N1 LTE Positioning Protocol message), SMS (N1 SMS message as specified in TS 23.040 and TS 24.011), UPDP (N1 messages for UE Policy Delivery (See Annex D of TS 24.501)) LCS (N1 message of Location service message type)) defined in TS 29.518. In terms of secure connectivity between elements of a core network - and as mentioned before - in the context of 5G, it is possible for HTTP/2-based interfaces (service based interfaces SBIs) to use TLS, but this relates to the connection between a pair of individual network functions or services (NFs) and not to an End-to-End (E2E) security mechanism; regarding security, when user equipment registers with the network, a non-access stratum security context is created which applies to the non-access stratum connection, i.e. between the user equipment and the access and mobility management function - hence, information sent via the access and mobility management function (e.g. towards the session management function, or towards other network functions or services) is visible to the access and mobility management function which is a drawback in case that it cannot be assured (or that it is not strived for to assure) that all components or network functions or services of a core network are part of a trusted domain; the same drawback applies to roaming with regard to the home and/or visited networks.
It is a design principle - in conventionally known telecommunications networks (e.g. in 5G core networks and prior generations of 3GPP systems) - that a core network is part of a trusted domain, i.e. the network elements within it can be trusted and security is provided on a hop-by-hop basis.
A similar approach exists - in conventionally known telecommunications networks - for roaming, whereas the inter-PLMN connection (N32 interface) can be secured, e.g. by means of TLS or PRINS: The Inter-PLMN user plane Security (IPUPS) is a Rel'16 functionality of the user plane function that enforces GTP-U security on the N9 interface between user plane functions of the visited and home PLMN; in order to realize roaming, certain network functions or services need to communicate with each other, mainly the session management functions and the policy and charging functions of the visited PLMN (V-PLMN) and home PLMH (H-PLMN), so as to establish a protocol data unit session (PDU session) connecting the user equipment and the data network (DN) via the V-PLMN; the control plane and the user plane connectivity is secured between the PLMNs (but not within) via the SEPP and IPUPS. The V-PLMN locates the appropriate network functions or services to address, within the H-PLMN (via the SEPP), either based on configuration or via the network repository function using network function or service discovery procedures.

According to the present invention, a non-access stratum security context is established in the first step between the user equipment and the user equipment bootstrapping function or service, wherein the user equipment requests the considered non-access stratum communication link - to the specific network function or service or the specific kind of network function functionality - by means of transmitting a non-access stratum request message to the user equipment bootstrapping function or service, wherein, in the second step, the non-access stratum endpoint information, referring to the specific network function or service or to the specified network function or service corresponding to the specific kind of network function functionality, is transmitted, by the user equipment bootstrapping function or service, to the user equipment,
wherein especially, as part of or prior to the non-access stratum security context being established between the user equipment and the user equipment bootstrapping function or service, the user equipment transmits an initial message to an access network or an access network node of the telecommunications network, wherein the initial message is forwarded, by the access network or the access network node of the telecommunications network, to the user equipment bootstrapping function or service, especially based on information provided as part of the initial message.

It is thereby advantageously possible to realize and implement the inventive method in a comparatively simple and efficient manner: By means of using the user equipment bootstrapping function or service as an independent non-access stratum component, the user equipment bootstrapping function or service is the only component required to be configured at the (radio) access network for bootstrapping the user equipment non-access stratum connectivity.

According to the present invention, it is furthermore advantageously possible and preferred that, in the first step, a non-access stratum security context is established between the user equipment and a further network function or service, wherein the further network function or service comprises or accesses the user equipment bootstrapping function or service, wherein the user equipment requests the considered non-access stratum communication link - to the one of the specific network function or service or the specific kind of network function functionality - by means of transmitting a non-access stratum request message to the further network function or service, wherein the further network function or service requests, from the user equipment bootstrapping function or service, the non-access stratum endpoint information, wherein, in the second step, the non-access stratum endpoint information, referring to the specific network function or service or to the specified network function or service corresponding to the specific kind of network function functionality, is transmitted, by the user equipment bootstrapping function or service to the further network function or service, and from the further network function or service to the user equipment.

It is thereby advantageously possible to realize and implement the inventive method in a comparatively simple and efficient manner by realizing the user equipment bootstrapping function or service behind another (especially existing) network function or service such as, e.g., the access and mobility management function (or an (instance of an) access and mobility management function), advantageously reducing the impact on the (radio) access network.

Furthermore, it is advantageously possible and preferred according to the present invention that the non-access stratum endpoint information is used, by the user equipment, to establish the considered non-access stratum security context and/or to conduct authentication of the user equipment with regard to the specific network function or service or with regard to the specified network function or service, wherein the non-access stratum endpoint information comprises at least one of the following, or consists of:
-- an IP address information,
-- an information that is able to be mapped to an IP address, especially a fully qualified domain name, FQDN, or an information that is able to be used to construct a fully qualified domain name, especially a well-known fully qualified domain name,
-- an indication pointing to data as part of a configured list,
-- an indication referring to a default value, especially a pre-configured default value, or a well-known default value,
-- a network function identifier, especially a universally unique identifier.

It is thereby advantageously possible to efficiently realize and implement the inventive method in a comparatively simple and efficient manner.

Furthermore, it is advantageously possible and preferred according to the present invention that - besides the considered non-access stratum communication link and the considered non-access stratum security context between the user equipment and the specific network function or service or the specified network function or service - a further considered non-access stratum communication link and a further considered non-access stratum security context between the user equipment and a further specific network function or service, especially of a further telecommunications network, is required, especially in case of a roaming situation of the user equipment being connected to, or roaming within, the further telecommunications network, wherein especially different keys and/or different encryption methods are used for the specific non-access stratum security context and the further specific non-access stratum security context, wherein especially
-- the specified or specific network function or service and the further specific network function or service are corresponding network functions or services, especially providing the same kind of network function functionalities, of the telecommunications network, and the further telecommunications network, respectively, wherein especially the considered non-access stratum communication link and/or the considered non-access stratum security context, on the one hand, and the further considered non-access stratum communication link and/or the further considered non-access stratum security context, on the other hand, are realized in a nested manner,
-- the specified or specific network function or service and the further specific network function or service are used in parallel by the user equipment and are non-corresponding network functions or services, providing the different kinds of network function functionalities.

Furthermore, it is advantageously possible and preferred according to the present invention that, regarding information elements and/or messages sent by the user equipment towards the specific or specified network function or service or the further specific network function or service, the respective non-access stratum endpoint information is included in such information elements and/or messages sent by the user equipment, wherein the access network or the access network node of the telecommunications network uses the respective non-access stratum endpoint information to forward such information elements and/or messages to their destination, wherein such information elements and/or messages sent by the user equipment especially comprise a destination information, referring to or indicating the specific or specified network function or service or the further specific network function or service or both a source information, referring to or indicating the user equipment and a destination information.

It is thereby advantageously possible to realize and implement the inventive method in a comparatively simple and efficient manner.

Furthermore, it is advantageously possible and preferred according to the present invention that the user equipment is configured with a non-access stratum endpoint information of the user equipment, especially in a subscriber identity module or the user equipment is assigned, by the telecommunications network, especially by the user equipment bootstrapping function or service or at network registration, to a non-access stratum endpoint information of the user equipment , wherein the user equipment is reachable, for non-access stratum communication, using this non-access stratum endpoint information.

It is thereby advantageously possible to realize and implement the inventive method in a comparatively simple and efficient manner.

Furthermore, it is advantageously possible and preferred according to the present invention that, regarding information elements and/or messages sent by the specific or specified network function or service or the further specific network function or service towards the user equipment, the non-access stratum endpoint information of the user equipment is included in such information elements and/or messages sent by the specific or specified network function or service or the further specific network function or service, wherein the access network or the access network node of the telecommunications network uses the non-access stratum endpoint information of the user equipment to forward such information elements and/or messages to the user equipment. Furthermore, it is advantageously possible and preferred according to the present invention that the access network learns the non-access stratum endpoint information of the user equipment from the messages exchanged between user equipment and bootstrapping function and associates the non-access stratum endpoint information of the user equipment with the user equipment, a subscriber identifier and/or a user equipment identifier, especially a user equipment or subscriber identifier included in a registration request.

It is thereby advantageously possible according to the present invention to realize and implement the inventive method in a comparatively simple and efficient manner.

Furthermore, it is advantageously possible and preferred according to the present invention that a first information element of or transmitted using the considered non-access stratum security context is able to be referenced by a second information element of or transmitted using the further considered non-access stratum security context, or vice versa, wherein the first information element or the second information element, if used as a piece of referencing information, referencing the other information element, comprises at least one out of the following:
-- a non-access stratum security context identifier information for the referenced non-access stratum communication link or the referenced non-access stratum security context, wherein the non-access stratum security context identifier information especially comprises the non-access stratum endpoint information of the referenced non-access stratum security context,
-- an information element identifier of the referenced information element,

wherein especially the first and second information element comprise information related to the same kind of network function functionalities, or related to different kinds of network function functionalities,
especially to policy and charging function functionalities and/or to session management function functionalities and/or to access and mobility management function functionalities.

Furthermore, it is advantageously possible and preferred according to the present invention that in the non-access stratum communication involving the user equipment and both the specific network function or service and the further specific network function or service, a plurality of different non-access stratum security contexts are used, especially in order to transmit user equipment route selection policy rules, wherein especially an information element, or part thereof, is visible and/or decodable by the specific network function or service or the further specific network function or service only in case the respective information element, or part thereof is part of the respective non-access stratum security context.

Furthermore, the present invention relates to a user equipment according to claim 11.

Furthermore, the present invention relates to a system or telecommunications network according to claim 12.

Furthermore, the present invention relates to a user equipment bootstrapping function or service according to claim 13.

Additionally, the present invention relates to a program comprising a computer readable program code which, when executed on a computer and/or on a user equipment and/or on a network node of a telecommunications network, especially a network function or service and/or a user equipment bootstrapping function or service, or in part on the user equipment and/or in part on the network node of the telecommunications network, especially the network function or service and/or in part on the user equipment bootstrapping function or service, causes the computer and/or the user equipment and/or the network node of the telecommunications network to perform the inventive method.

Additionally, the present invention relates to a computer-readable medium comprising instructions which when executed on a computer and/or on a user equipment and/or on a network node of a telecommunications network, especially a network function or service and/or a user equipment bootstrapping function or service, or in part on the user equipment and/or in part on the network node of the telecommunications network, especially the network function or service and/or in part on the user equipment bootstrapping function or service, causes the computer and/or the user equipment and/or the network node of the telecommunications network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network comprising an access network, a core network and a user equipment, wherein the core network typically comprises a number of network functions or services, such as an access and mobility management function, and other network functions or services, wherein the telecommunications network additionally comprises a user equipment bootstrapping function or service.
Figure 2 schematically illustrates the user equipment having established a plurality direct non-access stratum communication links to different network functions or services of the core network of the telecommunications network.
Figure 3 schematically illustrates a communication diagram showing a direct communication between the user equipment and the user equipment bootstrapping function or service.
Figure 4 schematically illustrates a communication diagram showing a communication between the user equipment and the user equipment bootstrapping function or service via the access and mobility management function.
Figure 5 schematically illustrates the user equipment having established two different non-access stratum communication links to two different network functions or services of the core network of the telecommunications network.
Figure 6 schematically illustrates the user equipment having established a non-access stratum communication link, respectively, to a network function or service of the core network of the telecommunications network, and to a network function or service of the core network of another telecommunications network, especially the home public land mobile network of the user equipment.
Figure 7 schematically illustrates the user equipment having established a non-access stratum communication link, respectively, to a network function or service of the core network of the telecommunications network, and to a network function or service of the core network of another telecommunications network, especially the home public land mobile network of the user equipment.
Figure 8 schematically illustrates a communication diagram showing examples of messages between the user equipment and different network functions or services of the core network of the telecommunications network and of the core network of another telecommunications network, especially the home public land mobile network of the user equipment.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

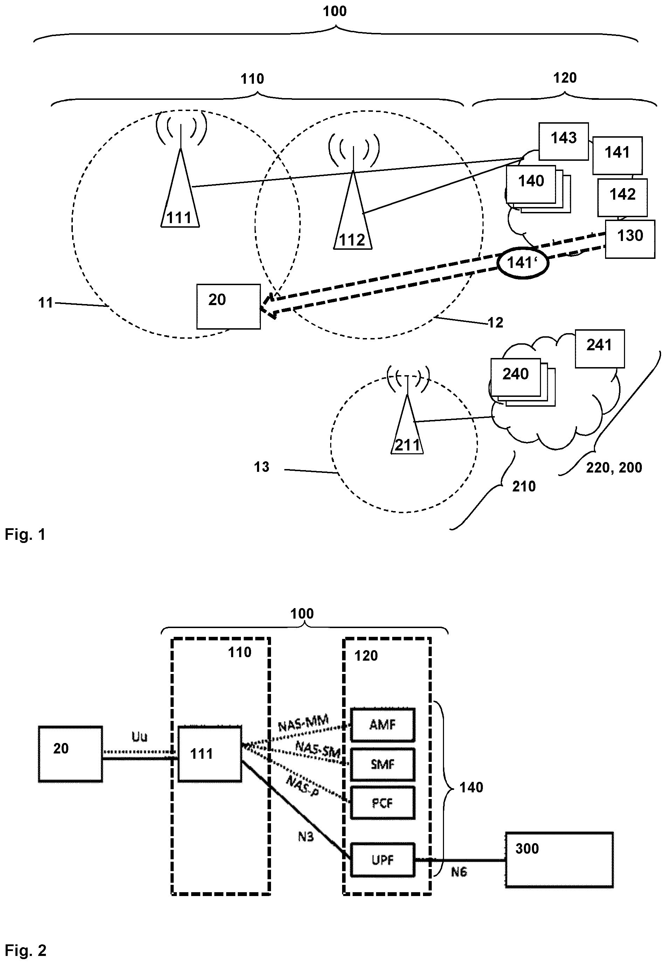

In Figure 1, a telecommunications network 100 comprising an access network 110, and a core network 120 is schematically shown. In Figure 1, the telecommunications network 100 is schematically shown as a mobile communication network 100, typically a cellular mobile communication network 100. However, the telecommunications network 100 might also be realized - at least in part - as a fixed-line telecommunications network 100 (not shown). The telecommunications network 100, especially the core network 120, typically comprises a number of network functions or services 140. Among the network functions or services 140, there might be different (kinds of) network functions or services, i.e. network functions or services providing different network function functionalities, such as, e.g., the access and mobility management function (AMF), the session management function (SMF), the policy and charging function (PCF), and the location management function (LMF). The access network 110 comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. A user equipment 20 is schematically shown, in Figure 1, as part of or within the radio coverage area of the first radio cell 11/first base station entity 111.
The user equipment 20 is typically, but not necessarily, mobile i.e. able to move with respect to the (typically, but not necessarily, static) radio cells 11, 12 or corresponding base station entities 111, 112 of the access network 110. In the exemplarily represented illustration of Figure 1, the core network 120 of the telecommunications network 100 comprises a specific network function or service 141, a further network function or service 142, and a further specific network function or service 143. Additionally, the core network 120 is schematically shown, in Figure 1, as comprising a user equipment bootstrapping function or service 130. According to the present invention, the user equipment bootstrapping function or service 130 is at least accessible by the user equipment 20 or by network nodes or network functions or services 140 of the core network (i.e. the user equipment bootstrapping function or service 130 being located outside of the core network 120 (e.g. as part of another network, not shown in Figure 1)), but - of course - it is also possible according to the present invention that the user equipment bootstrapping function or service 130 is part of the telecommunications network 100.

Furthermore, Figure 1 shows a further telecommunications network 200, the further telecommunications network 200 likewise being represented as a further mobile communication network 200, comprising a further access network 210 and a further core network 220, and comprising - exemplarily - a further radio cell 13 with a further base station entity 211. The further telecommunications network 200, especially the further core network 220, typically also comprises a number of further network functions or services 240. Among the further network functions or services 240, there might be different kinds of network functions or services, i.e. network functions or services providing different network function functionalities analogous to the scenario of the telecommunications network 100. In the exemplarily represented illustration of Figure 1, the further core network 220 of the further telecommunications network 200 comprises a network function or service, designated by means of reference sign 241, that is of the same kind (or network function functionality) as the specific network function or service 141.

Figure 1 primarily shows the simple situation that the user equipment 20 is connected to its home network 100, especially its home public land mobile network, i.e. the telecommunications network 100 represented in Figure 1 corresponds to the home network of the user equipment 20, i.e. the network to which the subscription information in the user equipment 20 relates to. In any case, the user equipment 20 is connected using access network 120, typically a radio access network.
In case this access network 120 does not correspond to (or belong to) the home network or home public land mobile network of the user equipment 20 (i.e. in case the telecommunications network 100 is not the home network of the user equipment 20), the access network 120 to which the user equipment 20 is connected is called the visited network or visited public land mobile network of the user equipment 20; and in this case, the user equipment 20 is typically also connected to its home network, or to the core network of its home network. In this latter case, the telecommunications network 100 corresponds to the visited telecommunications network (or visited public land mobile network or visited network) and the further telecommunications network 200 corresponds to the home telecommunications network (or home public land mobile network or home network) of the user equipment 20.

The present invention provides a method for establishing a non-access stratum communication link between the user equipment 20 and one of the plurality of network functions or services 140 of the telecommunications network 100. This non-access stratum communication link involves establishing a non-access stratum security context between the user equipment 20 and the one of the plurality of network functions or services 140. As already stated, the plurality of network functions or services 140 are able to be of different kinds, i.e. they are able to provide different kinds of network function functionalities but a subset of the plurality of network functions or services 140 can also be of the same kind, and then constitute different instances of the same network function functionality (or of the same kind of network function or service). According to the present invention, establishing the non-access stratum communication link involves using a user equipment bootstrapping function or service 130 which is part of the telecommunications network 100 or, at least, accessible via the telecommunications network 100 or by a network node thereof.
The establishment of a considered non-access stratum communication link and a considered non-access stratum security context involving the user equipment 20 is realized, according to the present invention, by means of, in a first step, the user equipment 20 requesting the considered non-access stratum communication link to be established. According to the present invention, either the user equipment 20 requests the considered non-access stratum communication link to be realized or established towards a specific network function or service 141 (i.e. not only a specific kind of network function functionality, but a specific instance thereof), or the user equipment requests the considered non-access stratum communication link to be realized or established towards a specific kind of network function functionality (and leaves it to either the access network 110 or the core network 120 to decide which instance of the plurality of network functions or services of the same kind is to involve). Either way, in a second step, the user equipment bootstrapping function or service 130 provides a non-access stratum endpoint information 141' regarding the specific network function or service 141 or regarding a specified network function or service (i.e. network function or service instance) corresponding to the specific kind of network function functionality, and, in a third step, the non-access stratum endpoint information 141' is used to establish the considered non-access stratum security context and/or to conduct authentication of the user equipment 20 with regard to either the specific network function or service 141, or the specified network function or service corresponding to the specific kind of network function functionality.

In Figure 2, the user equipment 20 is schematically shown, having established a plurality direct non-access stratum communication links to different network functions or services 140 of the core network 120 of the telecommunications network 100. Examples of the network functions or services 140 provided or shown in Figure 2 are the access and mobility management function (AMF), the session management function (SMF), the policy and charging function (PCF). The user plane function (UPF) is also shown and also constitutes a network function or service of the plurality of network functions or services 140, but the user equipment 20 is connected to the user plane function using a user plane (UP) connection (indicated, in Figure 2, by means of a drawn-through line) using (besides the Uu interface or Uu reference point between the user equipment 20 and the base station entity 111 (or gNB or the access network 110)) the N3 interface or N3 reference point between the base station entity 111 (or gNB or the access network 110) to the user plane function, whereas the connections between the user equipment 20 and the other network functions or services 140 (besides the user plane function) correspond to non-access stratum communication links, i.e. control plane (CP) connections towards the core network (indicated, in Figure 2, by means of a dotted line): NAS-MM towards the access and mobility management function, NAS-SM towards the session management function, and NAS-P towards the policy and charging function. The user plane function connects the user equipment 20 towards a data network 300, e.g. the internet.
According to the present invention, by means of the architecture shown in Figure 2, (i.e. by means of the different direct non-access stratum communication links (or multiple non-access stratum communication links and non-access stratum security contexts) between the user equipment 20 and the different network functions or services 140) it is advantageously possible - instead of using the access and mobility management function as (especially the sole) trusted termination of the user equipment's non-access stratum security context - that the user equipment 20 maintains, transparently via the access network, a respective non-access stratum security context with multiple core network entities (i.e. different network functions or services) for different purposes, i.e. the user equipment 20 maintains multiple non-access stratum security contexts. Especially, this enables the network functions or services to be placed in different trust domains: The user equipment 20 is aware of the network functions or services it is communicating with (authenticated communication), instead of implicitly trusting the next hop. Hence, this allows for a zero-trust architecture, and accordingly more decentralized and flexible deployments, e.g. deploying certain network functions or services in public clouds or in environments within less trusted environments (e.g. customer premise); in conventionally known telecommunications networks, this would not be possible as a conventional 5G core network deployment assumes a trust domain, and, e.g., if not, a "supposedly trusted NF" could do whatever it wants with messages it receives and other elements, including the user equipment 20, will not be aware of it.
According to the present invention, such an architecture is possible to be realized, especially by means of implementing bootstrapping, i.e. using the user equipment bootstrapping function or service 130: Given that the access network 110 must route control plane messages from the user equipment 20 to the core network 120, the access network needs to know to which network function or service 140 (of the core network 120) it needs to route respective control plane messages, and this especially in case that the user equipment 20 will be associated with many control plane network functions or services 140, and potentially dynamically assigned.
In order to provide for such a situation, the user equipment 20 is provided with the non-access stratum endpoints (or endpoint information), allowing the user equipment 20 to address the different network functions or services 140, and this endpoint information can then subsequently be used by the access network 110 (or base station entity 111) to route (non-access stratum) messages, hence the use of the user equipment bootstrapping function or service 130 (UBF). According to the present invention, especially two variants are considered for the user equipment bootstrapping function or service 130: According to a first embodiment, the user equipment bootstrapping function or service 130 is treated as or corresponds to a non-access stratum component, whereas according to a second embodiment, the user equipment bootstrapping function or service 130 is located or treated as being behind a network function or service, especially the access and mobility management function (or, interpreted otherwise, an enhanced version of the access and mobility management function might include the functionality of the user equipment bootstrapping function or service 130).
Especially according to the present invention, different key/encryption methods can be used for different NAS security contexts.

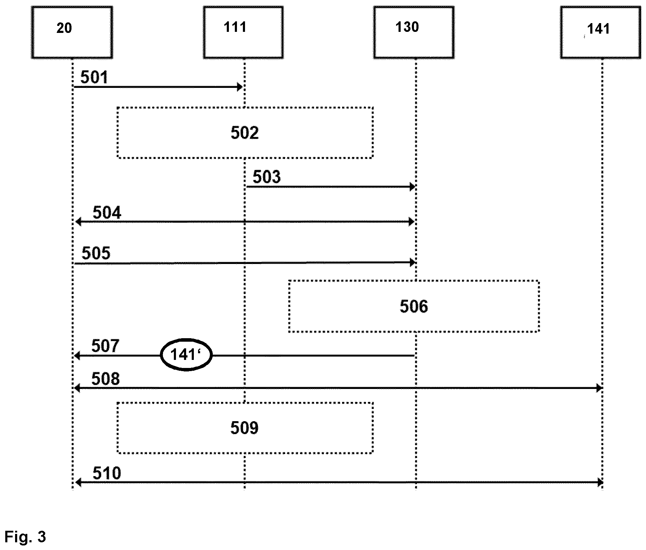

In Figure 3, a communication diagram is schematically shown between the user equipment 20, the base station entity 111, the user equipment bootstrapping function or service 130, and the access and mobility management function as the specific network function or service 141, the communication diagram showing - according to a first embodiment of the present invention, i.e. the user equipment bootstrapping function or service 130 as a non-access stratum component - a direct communication between the user equipment 20 and the user equipment bootstrapping function or service 130, and illustrating the establishment of a (considered) non-access stratum communication link (together with a (considered) non-access stratum security context) towards the access and mobility management function as the specific network function or service 141. In a first processing step 501, an initial message (user equipment request) is sent, by the user equipment 20, towards the access network 110 (i.e. towards the base station entity 111), the initial message being directed or intended towards the user equipment bootstrapping function or service 130 (the first message especially comprising a network identifier information and a user identifier information); in a second processing step 502, the access network 110 (or base station entity 111) routes user equipment request to the user equipment bootstrapping function or service 130 (or to an instance of a user equipment bootstrapping function or service 130) based on the provided information and the configuration. In a third processing step 503, the Initial message (user equipment request) is transmitted towards the user equipment bootstrapping function or service 130 (based on the network identifier information and the user identifier information). In a fourth processing step 504, a non-access stratum security context is established or authenticated towards the user equipment bootstrapping function or service 130 (i.e. between the user equipment 20 and the user equipment bootstrapping function or service 130). In a fifth processing step 505, a non-access stratum message is sent, by the user equipment 20 towards the user equipment bootstrapping function or service 130, requesting an non-access stratum endpoint information for NAS-MM + parameters, i.e. towards the specific network function or service 141 being (of the kind of) an access and mobility management function. In a sixth processing step 506, the user equipment bootstrapping function or service 130 maps the request and returns, in a seventh processing step 507, the requested non-access stratum endpoint information 141' (NAS-MM endpoint(s)) to the user equipment 20. In an eighth processing step 508, the (considered) non-access stratum security context (between the user equipment 20 and the access and mobility management function as the specific network function or service 141) is established and/or authenticated, using the non-access stratum endpoint information 141', i.e. with non-access stratum endpoint for NAS-MM. In a ninth processing step 509, the access network routes the corresponding user equipment request to the specific network function or service 141 based on the provided non-access stratum endpoint information 141'. In a tenth processing step 510, non-access stratum messages (in the considered case (of a access and mobility management function) NAS-MM messages) are able to be exchanged between the user equipment 20 and the specific network function or service 141 directly and in a secure manner. Hence, in case that the user equipment bootstrapping function or service 130 is or is treated as a non-access stratum component (direct communication with the user equipment 20), the user equipment bootstrapping function or service 130 is the only component required to be configured, at the access network, for bootstrapping the user equipment-non-access stratum connectivity; based on an initial bootstrapping message (first processing step 501) containing network-related information and user-related information, the access network 110/111 can route the message to the user equipment bootstrapping function or service 130 (third processing step 503) such that a non-access stratum security context can be established. From this point onwards, the access network 110 plays a transparent role in the information exchange between the user equipment 20 and the user equipment bootstrapping function or service 130 (information relay). In order to retrieve the non-access stratum endpoint (or non-access stratum endpoint information 141') including the type of non-access stratum endpoint requested (e.g. NAS-MM), the user equipment 20 queries the user equipment bootstrapping function or service 130 (processing steps 505, 506, 507). Based on the request, one or more non-access stratum endpoints or pieces of non-access stratum endpoint information are returned. With the provided endpoint (information 141'), the user equipment 20 is able to establish a non-access stratum security context. The non-access stratum endpoint contains information so that the access network can route the message towards the respective network function or service. Especially (according to different embodiments), the non-access stratum endpoint (information) 141' is or contains an IP address and/or contains information that can be mapped to an IP address (e.g. a FQDN, information that can be used to construct a well-known FQDN) and/or points to data in a configured list and/or maps to a default value (either pre-configured or well-known). After the establishment of the non-access stratum security context (cf. processing step 508), the user equipment 20 can securely communicate with the non-access stratum endpoint.

According to the present invention, any kind of (non-user plane) network function or service could be used as the specific network function or service 141 instead of the access and mobility management function as the specific network function or service 141 in order to establish a respective (considered) non-access stratum communication link with a (considered) non-access stratum security context, e.g., instead of the access and mobility management function: the session management function, the policy and charging function, the location management function, the short message service function.

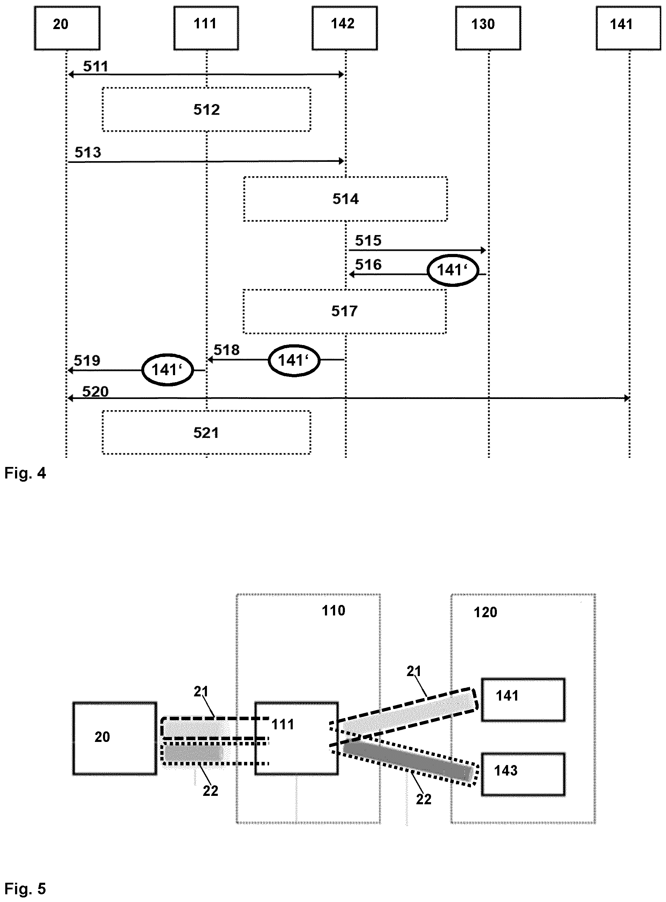

In Figure 4, a communication diagram is schematically shown between the user equipment 20, the base station entity 111, the user equipment bootstrapping function or service 130, the session management function as the specific network function or service 141, and the access and mobility management function as the further network function or service 142, the communication diagram showing - according to a second embodiment of the present invention, i.e. the user equipment bootstrapping function or service 130 is located or treated as being behind the further network function or service 142, especially the access and mobility management function - a communication between the user equipment 20 and the user equipment bootstrapping function or service 130 via the access and mobility management function, i.e. via the further network function or service 142, and illustrating the establishment of a (considered) non-access stratum communication link (together with a (considered) non-access stratum security context) towards the session management function as the specific network function or service 141.
In a first processing step 511, the user equipment 20 registers to the network (i.e. user equipment registration occurs especially via a request in a manner according to established procedures); this comprises the establishment of a non-access stratum security context between the user equipment 20 and the access and mobility management function and involves communication between the user equipment 20 with the access and mobility management function as the further network function or service 142. In a second processing step 512, the access network 110, and especially the base station entity 111, routes the user equipment request to an access and mobility management function (i.e. an instance of potentially a plurality of access and mobility management function instances) as the further network function or service 142; this occurs based on provided information and configuration. In a third processing step 513, the user equipment 20 transmits a non-access stratum message requesting a (non-access stratum communication link) endpoint for NAS-SM communication (i.e. to either the session management function or to an instance providing session management functionality); this non-access stratum message also comprises appropriate parameters. In a fourth processing step 514, the further network function or service 142 (typically, but not necessarily an access and mobility management function) retrieves the NAS-SM related endpoint request information from the user equipment bootstrapping function or service 130, comprising requesting - in a fifth processing step 515, from the user equipment bootstrapping function or service 130 - the NAS-SM endpoint(s) or endpoint information 141', and retrieving (or receiving) - in a sixth processing step 516, from the user equipment bootstrapping function or service 130 - the NAS-SM endpoint(s) or endpoint information 141'. In a seventh processing step 517, the access and mobility management function (as the further network function or service 142) produces the NAS-SM endpoint(s), i.e. the non-access stratum endpoint information 141', to be sent to the user equipment 20 based on the information received from the user equipment bootstrapping function or service 130, and transmits this non-access stratum endpoint information 141' towards the user equipment 20, via the access network 110, i.e. the base station entity 111, cf. an eighth processing step 518, and a ninth processing step 519 in Figure 4. In a tenth processing step 520, the (considered) non-access stratum security context (between the user equipment 20 and the session management function as the specific network function or service 141 is established and/or authenticated, using the non-access stratum endpoint information 141', i.e. with non-access stratum endpoint for NAS-SM. In an eleventh processing step 521, the access network routes the corresponding user equipment request to the specific network function or service 141 (session management function in Figure 4)) based on the provided non-access stratum endpoint information 141'; then, non-access stratum messages (in the considered case (of an session management function) NAS-SM messages) are able to be exchanged between the user equipment 20 and the specific network function or service 141 directly and in a secure manner.
Hence, according to the second embodiment, in order to reduce the necessity to modify the access network functionality (or to reduce an access network impact), (e.g.) the access and mobility management function is enhanced to further include the functionality to provide non-access stratum endpoints (or non-access stratum endpoint information) to the user equipment 20. In this case, the user equipment network registration and establishment of the non-access stratum security context with the access and mobility management function (as the further network function or service) is performed based on the conventionally known procedures, and messages are routed to the access and mobility management function based on existing means. The user equipment 20 can then request the access and mobility management function (as the further network function or service 142) to provide a non-access stratum endpoint of or towards a session management function (e.g. NAS-SM to establish a PDU session). The access and mobility management function as further network function or service 142 then retrieves the non-access stratum endpoint information from the user equipment bootstrapping function or service 130 based on the information provided by the user equipment 20 (the user equipment bootstrapping function or service functionality could especially be an integral part of the access and mobility management function and based on simple means such as configuration within the access and mobility management function), and one or more non-access stratum endpoints (or pieces of endpoint information) are returned to the user equipment 20; with the provided non-access stratum endpoint, the user equipment 20 is then able to establish the (considered) non-access stratum security context with the session management function, i.e. the specific network function or service 141.

The present invention not only relates to solely establishing different non-access stratum communication links and different non-access stratum security contexts from a user equipment towards a plurality of different network functions or services but also to provide for a solution to link (or chain) different non-access stratum communication links or non-access stratum security contexts together - or, otherwise stated, to provide for a possibility to realize a sort of connection between different non-access stratum communication links and/or non-access stratum security contexts. This is especially relevant in case of roaming: Especially in the case of roaming, specifically home-routed, the visited network (V-PLMN) and the home network (H-PLMN) need to exchange information so as to build an end-to-end (E2E) path including policies, charging, etc. to provide connectivity to the user equipment 20 while the user equipment 20 is not within its home network. With the zero-trust approach, the network functions or services of the V-PLMN are not aware of any parameters that the user equipment 20 exchanges with its home network (H-PLMN); e.g. the V-PLMN is not able to relay control plane messages to the correct network function or service (e.g. session management function) within the H-PLMN if it does not know what the user equipment 20 has actually requested.
Hence, in order for roaming to work, there is a need to share information between network functions or services in the visited network and in the home network. However, a secure communication between the user equipment and network functions or services in the home network makes it impossible for the visited network to properly fulfill its role. As already mentioned, according to the present invention it is proposed to use multiple (or different) non-access stratum security contexts in parallel, e.g. for policy (PCF) and session management (SMF). Complementary information can be available via the different channels, such as, e.g.,:
-- a user equipment route selection policy (URSP) rule (policy-related) requiring metadata from a PDU Session (session-management-related) and/or
-- a PDU session establishment (session-management-related) requiring information related to user equipment capabilities (typically exchanged at user equipment registration, i.e. access-management-related) and/or
-- set "placeholder" Information Elements (IEs) that are not known to a network function but are known to be contained in another security context for privacy reasons.
While it is certainly possible to send the same information (or the same (control) content) via multiple non-access stratum security contexts so that each non-access stratum security context is self-contained, it is more efficient to be able to link different non-access stratum security contexts in a complementary way.

In this respect, Figure 5 schematically illustrates the user equipment 20 having established two different non-access stratum communication links 21, 22, that is, in parallel, to two different network functions or services 141, 143 of the core network 120 of the telecommunications network 100, namely a first non-access stratum communication link 21 to the specific network function or service 141, and a second non-access stratum communication link 22 to the further specific network function or service 143. Between the user equipment 20 and the (radio) access network 110, the non-access stratum signaling is transported via (in case of a mobile communication network) the air interface towards the base station entity 111, especially a gNB. The (radio) access network 110 forwards (transparent forwarding done by the gNB) the non-access stratum signaling but its content is encrypted. Between the (radio) access network 110 and the core network 120, parallel security contexts transport the non-access stratum signaling between the user equipment 20 and several network functions or services in the core network 120.

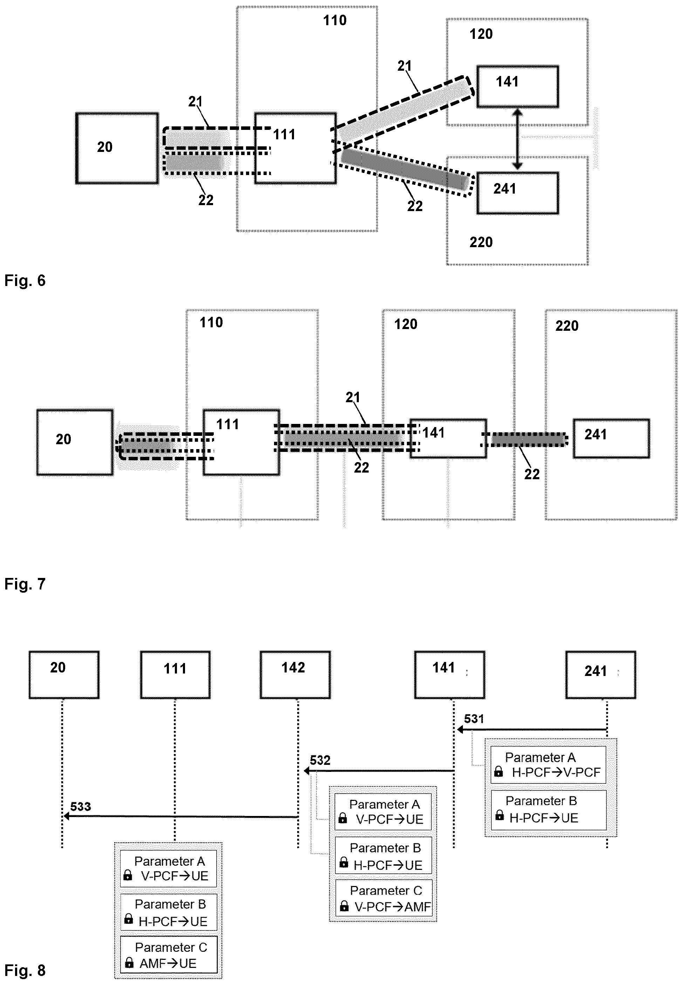

Figure 6 schematically illustrates another example of two parallel non-access stratum security contexts, with the user equipment 20 having established a first non-access stratum communication link 21 to a specific network function or service 141 of the core network 120 of the telecommunications network 100 (e.g. as its visited network), and a second non-access stratum communication link 22 to a further specific network function or service 241 of the further core network 220 of the further telecommunications network 200 (e.g. as its home network). Hence, Figure 6 especially shows the case of roaming and the application of multiple security contexts 21, 22 to, e.g., the policy and charging function case: In this case, the H-PCF (further specific network function or service 143) can directly send information that needs to be protected via the user equipment-to-H-PCF 241 security context 22 and send the V-PCF 141 a reference that the V-PCF 141 can use to construct its messages if the information (even if the content is not known to the V-PCF) should be referenced in its communication with the user equipment 20. The double arrow between the specific network function or service 141 (e.g. a policy and charging function of the visited network) and the further specific network function or service 241 (e.g. a policy and charging function of the home network) illustrates inter PLMN between the network functions or services for the roaming case.

Figure 7 schematically illustrates the user equipment 20 communicating with different network functions with multiple non-access stratum security contexts in a nested manner, with the user equipment 20 having established the first non-access stratum communication link 21 to the specific network function or service 141 of the core network 120 of the telecommunications network 100, and the second non-access stratum communication link 22 to the further specific network function or service 241 of the further core network 220 of the further telecommunications network 200, especially the telecommunications network 100 corresponding to the visited network of the user equipment 20 and the further telecommunications network 200 corresponding to the home network of the user equipment 20. Figure 7 shows an example where non-access stratum communication links between the user equipment 20 and a plurality of network functions or services are chained together or nested (network function chaining by means of nesting security contexts), used, e.g., for the case of URSP rule signaling in home-routed roaming. In this case, two PCFs (i.e. the specific network function or service being a policy and charging function in the visited network (V-PCF), and the further specific network function or service being a policy and charging function in the home network (H-PCF) of the user equipment 20) are required; in its simplest form, it is not possible for a forwarding entity to gain insight into the information being forwarded: The gNB or base station entity 111 in the radio access network 110 may not even be aware that there are multiple, nested non-access stratum security contexts (it nevertheless fulfills the same role of transparent forwarding as previously explained; between the radio access network 110 and the core network 120 of the visited network, the nested non-access stratum security contexts transport non-access stratum signaling between the user equipment 20 and a network function or service in the core network; the V-PCF 141 can access information from its security context but otherwise realizes transparent forwarding of the nested security content.
While the H-PCF 241 is responsible for setting URSP rules, the V-PCF 141 needs to setup the V-SMF (not shown in Figure 7) and thus indirectly QoS in the V-UPF (not shown in Figure 7) so that the agreed quality-of-service can be established. However, it may be desirable for the H-PLMN to keep some information private from the V-PLMN. However, it can be beneficial to enable different levels of visibility for the forwarding entity. To enable different levels of visibility for different elements within a transmitted piece of information, the URSP rule can be sent via current means from the H-PCF 241 to the V-PCF 141, whereas information parts the H-PLMN does not want to disclose to the V-PLMN (e.g. an application ID) are sent via the a NAS security context between the H-PCF and UE, either in parallel or nested within the NAS security context of the V-PCF 141. Hence, it is possible that an information element in one non-access stratum security context is referencing another non-access stratum security context or an information element thereof. Likewise on the interface between the H-PCF 241 and the V-PCF 141 (that might be realized using N24: V/H-PCF + H-NAS-P interfaces or protocols, or, alternatively, using N32 and SEPP interfaces or protocols), the relay functionality of the V-PCF 141 (used for forwarding communication towards the H-PCF 241, and for receiving from there) is able to access transmitted information in the N24 (or N32/SEPP) interface between H-PCF 241 and V-PCF 141 but not between H-PCF 241 and the user equipment 20, such that the user equipment 20 is able to reconstruct the full information received via the NAS security context with the V-PLMN's PCF 141 and the H-PLMN's PCF 241, information elements can be referenced between security contexts. Whereas the reference includes:
-- a non-access stratum security context identifier information for the referenced non-access stratum communication link or the referenced non-access stratum security context, wherein the non-access stratum security context identifier information especially comprises the non-access stratum endpoint information of the referenced non-access stratum security context,
   -- an information element identifier of the referenced information element
The V-PCF 141 (intermediate network function or service) relays the NAS messages between the user equipment 20 and the H-PCF 241 (final network function or service). While the intermediate network function or service 141 is aware that some information is transmitted via a second channel, it cannot access this information.

In an alternative embodiment, the H-PCF 241 is able to send a data element to a V-PCF 141 (e.g. a UE policy container) composed of information elements (IEs), e.g. NAS IEs in the case of a UE policy container, where some IEs are visible to the V-PCF 141 (e.g. securely using the security context between H-PCF 241 and V-PCF 141), whereas some other elements are not visible: either the IE content (e.g. the V-PCF 141 can be aware that a URSP rule references an application descriptor but cannot see the actual descriptor) or IE content and IE type (e.g. the V-PCF 141 can only see that some information contained in the URSP rule is encrypted). Preferably and advantageously, cryptographic methods (e.g. signing) is applied to ensure that non-encrypted IEs are not modified by the V-PCF 141; in such a case, a data element (e.g. the mentioned URSP rule) received by the user equipment 20 is able to contain or comprise information from two security contexts, i.e. the IEs being verifiably originating from the V-PCF 141 and/or from the H-PCF 241. Such a scenario is schematically shown in Figure 8, which shows a communication diagram between the user equipment 20, the base station entity 111, the further network function or service 142 (for example an access and mobility management function, AMF), the visited policy and charging function V-PCF as the specific network function or service 141, and the home policy and charging function H-PCF as the further specific network function or service 241, the communication diagram showing examples of messages: a first message (in a first processing step 531) from the H-PCF 241 to the V-PCF 141, a second message (in a second processing step 532) from the V-PCF 141 to the AMF 142, a third message (in a third processing step 533) from the AMF 142 to the user equipment 20. The first message comprises a Parameter A (or information element A) transported in a non-access stratum security context from H-PCF 241 to V-PCF 141, and a Parameter B (or information element B) transported in a non-access stratum security context from H-PCF 241 to the user equipment 20. The second message comprises a Parameter A (or information element A) transported in a non-access stratum security context from V-PCF 141 to the user equipment 20, a Parameter B (or information element B) transported in a non-access stratum security context from H-PCF 241 to the user equipment 20, and a Parameter C (or information element C) transported in a non-access stratum security context from V-PCF 141 to AMF 142. The third message comprises a Parameter A (or information element A) transported in a non-access stratum security context from V-PCF 141 to the user equipment 20, a Parameter B (or information element B) transported in a non-access stratum security context from H-PCF 241 to the user equipment 20, and a Parameter C (or information element C) transported in a non-access stratum security context from AMF 142 to the user equipment 20. Hence, a given parameter can be sent so that an intermediary recipient can be aware of it (if this is desired) and, also, that an information is able to be concealed from an intermediary recipient (if this is desired).
According to the present invention, especially both embodiments or approaches are preferably combined for sending non-access stratum Information Elements (IEs):
-- via multiple non-access stratum security contexts, i.e. in an authenticated, secure and integrity-protected way,
-- through multiple forwarding entities, and/or
-- allowing granular control over what entity/entities can see, add, remove and/or change values in the non-access stratum signaling chain, and/or
-- without the need to replicate data that needs to be used by entities communicating via different non-access stratum security contexts.

## Claims

1. Method for establishing a non-access stratum communication link between a user equipment (20) and one of a plurality of network functions or services (140) of a telecommunications network (100), wherein the non-access stratum communication link involves establishing a non-access stratum security context between the user equipment (20) and the one of the plurality of network functions or services (140), the plurality of network functions or services (140) being able to provide different kinds of network function functionalities,
wherein establishing the non-access stratum communication link involves using a user equipment bootstrapping function or service (130), the user equipment bootstrapping function or service (130) either being a part of the telecommunications network (100) or being accessible via the telecommunications network (100) or by a network node thereof,
**characterized in that**, in order to establish a considered non-access stratum communication link and a considered non-access stratum security context involving the user equipment (20), the method comprises the following steps:
-- in a first step, a non-access stratum security context is established between the user equipment (20) and the user equipment bootstrapping function or service (130), wherein the user equipment (20) requests the considered non-access stratum communication link to a specific network function or service (141) or a specific kind of network function functionality to be established, wherein the user equipment (20) requests the considered non-access stratum communication link by means of transmitting a non-access stratum request message to the user equipment bootstrapping function or service (130),
-- in a second step, the user equipment bootstrapping function or service (130) provides a non-access stratum endpoint information (141') regarding the specific network function or service (141) or regarding a specified network function or service corresponding to the specific kind of network function functionality, wherein the non-access stratum endpoint information (141'), referring to the specific network function or service (141) or to the specified network function or service corresponding to the specific kind of network function functionality, is transmitted, by the user equipment bootstrapping function or service (130), to the user equipment (20),
-- in a third step, the non-access stratum endpoint information (141') is used to establish the considered non-access stratum security context and/or to conduct authentication of the user equipment (20) with regard to either the specific network function or service (141), or the specified network function or service corresponding to the specific kind of network function functionality.

2. Method according to claim 1, wherein, as part of or prior to the non-access stratum security context being established between the user equipment (20) and the user equipment bootstrapping function or service (130), the user equipment (20) transmits an initial message to an access network (110) or an access network node (111) of the telecommunications network (100), wherein the initial message is forwarded, by the access network (110) or the access network node (111) of the telecommunications network (100), to the user equipment bootstrapping function or service (130), especially based on information provided as part of the initial message.

3. Method according to one of the preceding claims, wherein, in the first step, a non-access stratum security context is established between the user equipment (20) and a further network function or service (142), wherein the further network function or service (142) comprises or accesses the user equipment bootstrapping function or service (130), wherein the user equipment (20) requests the considered non-access stratum communication link - to the specific network function or service (141) or the specific kind of network function functionality - by means of transmitting a non-access stratum request message to the further network function or service (142), wherein the further network function or service (142) requests, from the user equipment bootstrapping function or service (130), the non-access stratum endpoint information (141'), wherein, in the second step, the non-access stratum endpoint information (141'), referring to the specific network function or service (141) or to the specified network function or service corresponding to the specific kind of network function functionality, is transmitted, by the user equipment bootstrapping function or service (130) to the further network function or service (142), and from the further network function or service (142) to the user equipment (20).

4. Method according to one of the preceding claims, wherein, especially in the third step, the non-access stratum endpoint information (141') is used, by the user equipment (20), to establish the considered non-access stratum security context and/or to conduct authentication of the user equipment (20) with regard to the specific network function or service (141) or with regard to the specified network function or service, wherein the non-access stratum endpoint information (141') comprises at least one of the following, or consists of:
-- an IP address information,
-- an information that is able to be mapped to an IP address, especially a fully qualified domain name, FQDN, or an information that is able to be used to construct a fully qualified domain name, especially a well-known fully qualified domain name,
-- an indication pointing to data as part of a configured list,
-- an indication referring to a default value, especially a pre-configured default value, or a well-known default value,
-- a network function identifier, especially a universally unique identifier.

5. Method according to one of the preceding claims, wherein - besides the considered non-access stratum communication link and the considered non-access stratum security context between the user equipment (20) and the specific network function or service (141) or the specified network function or service - a further considered non-access stratum communication link and a further considered non-access stratum security context between the user equipment (20) and a further specific network function or service (143, 241), especially of a further telecommunications network (200), is required, especially in case of a roaming situation of the user equipment (20) being connected to, or roaming within, the further telecommunications network (200), wherein especially different keys and/or different encryption methods are used for the specific non-access stratum security context and the further specific non-access stratum security context,
wherein especially
-- the specified or specific network function or service (141) and the further specific network function or service (143, 241) are corresponding network functions or services, especially providing the same kind of network function functionalities, of the telecommunications network (100), and the further telecommunications network (200), respectively, wherein especially the considered non-access stratum communication link and/or the considered non-access stratum security context, on the one hand, and the further considered non-access stratum communication link and/or the further considered non-access stratum security context, on the other hand, are realized in a nested manner, or
-- the specified or specific network function or service (141) and the further specific network function or service (143, 241) are used in parallel by the user equipment (20) and are non-corresponding network functions or services, providing the different kinds of network function functionalities .

6. Method according to one of the preceding claims, wherein, regarding information elements and/or messages sent by the user equipment (20) towards the specific or specified network function or service (141) or the further specific network function or service (143, 241), the respective non-access stratum endpoint information (141') is included in such information elements and/or messages sent by the user equipment (20), wherein the access network (110) or the access network node (111) of the telecommunications network (100) uses the respective non-access stratum endpoint information (141') to forward such information elements and/or messages to their destination, wherein such information elements and/or messages sent by the user equipment (20) especially comprise a destination information, referring to or indicating the specific or specified network function or service (141) or the further specific network function or service (143, 241) or both a source information, referring to or indicating the user equipment (20) and a destination information.

7. Method according to one of the preceding claims, wherein the user equipment (20) is configured with a non-access stratum endpoint information of the user equipment (20), especially in a subscriber identity module or the user equipment (20) is assigned, by the telecommunications network (100), especially by the user equipment bootstrapping function or service (130) or at network registration, to a non-access stratum endpoint information of the user equipment (20) , wherein the user equipment (20) is reachable, for non-access stratum communication, using this non-access stratum endpoint information.

8. Method according to one of the preceding claims, wherein, regarding information elements and/or messages sent by the specific or specified network function or service (141) or the further specific network function or service (143, 241) towards the user equipment (20), the non-access stratum endpoint information of the user equipment (20) is included in such information elements and/or messages sent by the specific or specified network function or service (141) or the further specific network function or service (143, 241), wherein the access network (110) or the access network node (111) of the telecommunications network (100) uses the non-access stratum endpoint information of the user equipment (20) to forward such information elements and/or messages to the user equipment (20).

9. Method according to one of the preceding claims, wherein a first information element of or transmitted using the considered non-access stratum security context is able to be referenced by a second information element of or transmitted using the further considered non-access stratum security context, or vice versa,
wherein the first information element or the second information element, if used as a piece of referencing information, referencing the other information element, comprises at least one out of the following:
-- a non-access stratum security context identifier information for the referenced non-access stratum communication link or the referenced non-access stratum security context, wherein the non-access stratum security context identifier information especially comprises the non-access stratum endpoint information (141') of the referenced non-access stratum security context,
-- an information element identifier of the referenced information element, wherein especially the first and second information element comprise information related to the same kind of network function functionalities, or related to different kinds of network function functionalities,
especially to policy and charging function functionalities and/or to session management function functionalities and/or to access and mobility management function functionalities.

10. Method according to one of the preceding claims, wherein in the non-access stratum communication involving the user equipment (20) and both the specific network function or service (141) and the further specific network function or service (143, 241), a plurality of different non-access stratum security contexts are used, especially in order to transmit user equipment route selection policy rules, wherein especially an information element, or part thereof, is visible and/or decodable by the specific network function or service (141) or the further specific network function or service (143, 241) only in case the respective information element, or part thereof is part of the respective non-access stratum security context.

11. User equipment (20) for establishing a non-access stratum communication link between the user equipment (20) and one of a plurality of network functions or services (140) of a telecommunications network (100), wherein the non-access stratum communication link involves establishing a non-access stratum security context between the user equipment (20) and the one of the plurality of network functions or services (140), the plurality of network functions or services (140) being able to provide different kinds of network function functionalities,
wherein the user equipment (20) is configured such that for establishing the non-access stratum communication link a user equipment bootstrapping function or service (130) is used,
**characterized in that**, in order to establish a considered non-access stratum communication link and a considered non-access stratum security context involving the user equipment (20), the user equipment (20) is configured such that:
-- after a non-access stratum security context is established between the user equipment (20) and the user equipment bootstrapping function or service (130), the user equipment (20) requests the considered non-access stratum communication link to a specific network function or service (141) or a specific kind of network function functionality to be established, wherein the user equipment (20) requests the considered non-access stratum communication link by means of transmitting a non-access stratum request message to the user equipment bootstrapping function or service (130),
-- the user equipment bootstrapping function or service (130) provides a non-access stratum endpoint information (141') regarding the specific network function or service (141) or regarding a specified network function or service corresponding to the specific kind of network function functionality, wherein the non-access stratum endpoint information (141'), referring to the specific network function or service (141) or to the specified network function or service corresponding to the specific kind of network function functionality, is received by the user equipment (20) from the user equipment bootstrapping function or service (130),
-- the non-access stratum endpoint information (141') is used to establish the considered non-access stratum security context and/or to conduct authentication of the user equipment (20) with regard to either the specific network function or service (141) or the specified network function or service corresponding to the specific kind of network function functionality.

12. Telecommunications network (100) for establishing a non-access stratum communication link between a user equipment (20) and one of a plurality of network functions or services (140) of the telecommunications network (100), wherein the non-access stratum communication link involves establishing a non-access stratum security context between the user equipment (20) and the one of the plurality of network functions or services (140), the plurality of network functions or services (140) being able to provide different kinds of network function functionalities,
wherein establishing the non-access stratum communication link involves using a user equipment bootstrapping function or service (130), the user equipment bootstrapping function or service (130) being a part of the telecommunications network (100)
**characterized in that**, in order to establish a considered non-access stratum communication link and a considered non-access stratum security context involving the user equipment (20), the system or telecommunications network (100) is configured such that:
-- after a non-access stratum security context is established between the user equipment (20) and the user equipment bootstrapping function or service (130), the user equipment bootstrapping function or service (130) receives from the user equipment (20) a non-access stratum request message requesting the establishment of the considered non-access stratum communication link to a specific network function or service (141) or a specific kind of network function functionality,
-- the user equipment bootstrapping function or service (130) provides a non-access stratum endpoint information (141') regarding the specific network function or service (141) or regarding the specified network function or service corresponding to the specific kind of network function functionality, wherein the non-access stratum endpoint information (141'), referring to the specific network function or service (141) or to the specified network function or service corresponding to the specific kind of network function functionality, is transmitted, by the user equipment bootstrapping function or service (130), to the user equipment (20),
-- the non-access stratum endpoint information (141') is used to establish the considered non-access stratum security context and/or to conduct authentication of the user equipment (20) with regard to either the specific network function or service (141) or the specified network function or service corresponding to the specific kind of network function functionality.

13. User equipment bootstrapping function or service (130), as part of a telecommunications network (100) according to claim 12, for establishing a non-access stratum communication link between a user equipment (20) and one of a plurality of network functions or services (140) of the telecommunications network (100), wherein the non-access stratum communication link involves establishing a non-access stratum security context between the user equipment (20) and the plurality of network functions or services (140), the plurality of network functions or services (140) being able to provide different kinds of network function functionalities,
wherein establishing the non-access stratum communication link involves using the user equipment bootstrapping function or service (130), the user equipment bootstrapping function or service (130) either being a part of the telecommunications network (100) or being accessible via the telecommunications network (100) or by a network node thereof,
**characterized in that**, in order to establish a considered non-access stratum communication link and a considered non-access stratum security context involving the user equipment (20), the user equipment bootstrapping function or service (130) is configured such that:
-- after a non-access stratum security context is established between the user equipment (20) and the user equipment bootstrapping function or service (130), the user equipment bootstrapping function or service (130) receives from the user equipment (20) a non-access stratum request message requesting the establishment of the considered non-access stratum communication link to a specific network function or service (141) or a specific kind of network function functionality,
-- the user equipment bootstrapping function or service (130) provides a non-access stratum endpoint information (141') regarding the specific network function or service (141) or regarding the specified network function or service corresponding to the specific kind of network function functionality, wherein the non-access stratum endpoint information (141'), referring to the specific network function or service (141) or to the specified network function or service corresponding to the specific kind of network function functionality, is transmitted, by the user equipment bootstrapping function or service (130), to the user equipment (20),
-- the non-access stratum endpoint information (141') is used to establish the considered non-access stratum security context and/or to conduct authentication of the user equipment (20) with regard to either the specific network function or service (141) or a specified network function or service corresponding to the specific kind of network function functionality.

14. Program comprising a computer readable program code which, when executed on a computer and/or on a user equipment (20) and/or on a network node of a telecommunications network (100), especially a network function or service (140) and/or a user equipment bootstrapping function or service (130), or in part on the user equipment (20) and/or in part on the network node of the telecommunications network (100), especially the network function or service (140) and/or in part on the user equipment bootstrapping function or service (130), causes the computer and/or the user equipment (20) and/or the network node of the telecommunications network (100) to perform a method according one of claims 1 to 10.

15. Computer-readable medium comprising instructions which when executed on a computer and/or on a user equipment (20) and/or on a network node of a telecommunications network (100), especially a network function or service (140) and/or a user equipment bootstrapping function or service (130), or in part on the user equipment (20) and/or in part on the network node of the telecommunications network (100), especially the network function or service (140) and/or in part on the user equipment bootstrapping function or service (130), causes the computer and/or the user equipment (20) and/or the network node of the telecommunications network (100) to perform a method according one of claims 1 to 10.

## Patentansprüche

1. Verfahren zum Herstellen einer Nichtzugangsschicht-Kommunikationsverbindung zwischen einer Benutzerausrüstung (20) und einem aus mehreren Netzfunktionen oder Netzdiensten (140) eines Telekommunikationsnetzes (100), wobei die Nichtzugangsschicht-Kommunikationsverbindung das Herstellen eines Nichtzugangsschicht-Sicherheitskontextes zwischen der Benutzerausrüstung (20) und der einen aus den mehreren Netzfunktionen oder Netzdiensten (140) umfasst, wobei die mehreren Netzfunktionen oder Netzdienste (140) in der Lage sind, verschiedene Arten von Netzfunktionsfunktionalitäten bereitzustellen,
wobei das Herstellen der Nichtzugangsschicht-Kommunikationsverbindung die Verwendung einer Benutzerausrüstungs-Bootstrapping-Funktion oder eines Benutzerausrüstungs-Bootstrapping-Dienstes (130) umfasst, wobei die Benutzerausrüstungs-Bootstrapping-Funktion oder der Benutzerausrüstungs-Bootstrapping-Dienst (130) entweder ein Teil des Telekommunikationsnetzes (100) ist oder über das Telekommunikationsnetz (100) oder durch einen Netzknoten desselben zugänglich ist,
**dadurch gekennzeichnet, dass** das Verfahren, um eine in Betracht gezogene Nichtzugangsschicht-Kommunikationsverbindung und einen in Betracht gezogenen Nichtzugangsschicht-Sicherheitskontext unter Einbeziehung der Benutzerausrüstung (20) herzustellen, die folgenden Schritte umfasst:
- in einem ersten Schritt wird ein Nichtzugangsschicht-Sicherheitskontext zwischen der Benutzerausrüstung (20) und der Benutzerausrüstungs-Bootstrapping-Funktion oder dem Benutzerausrüstungs-Bootstrapping-Dienst (130) eingerichtet, wobei die Benutzerausrüstung (20) die in Betracht gezogene Nichtzugangsschicht-Kommunikationsverbindung zu einer spezifischen Netzfunktion oder einem spezifischen Netzdienst (141) oder einer spezifischen Art von herzustellender Netzfunktionsfunktionalität anfordert, wobei die Benutzerausrüstung (20) die in Betracht gezogene Nichtzugangsschicht-Kommunikationsverbindung mittels Senden einer Nichtzugangsschicht-Anforderungsnachricht an die Benutzerausrüstungs-Bootstrapping-Funktion oder den Benutzerausrüstungs-Bootstrapping-Dienst (130) anfordert,
- in einem zweiten Schritt stellt die Benutzerausrüstungs-Bootstrapping-Funktion oder der Benutzerausrüstungs-Bootstrapping-Dienst (130) eine Nichtzugangsschicht-Endpunktinformation (141') bezüglich der spezifischen Netzfunktion oder des spezifischen Netzdienstes (141) oder bezüglich einer spezifizierten Netzfunktion oder eines spezifizierten Netzdienstes, die bzw. der der spezifischen Art von Netzfunktionsfunktionalität entspricht, bereit, wobei die Nichtzugangsschicht-Endpunktinformation (141'), die sich auf die spezifische Netzfunktion oder den spezifischen Netzdienst (141) oder auf die spezifizierte Netzfunktion oder den spezifizierten Netzdienst, die bzw. der der spezifischen Art von Netzfunktionsfunktionalität entspricht, bezieht, durch die Benutzerausrüstungs-Bootstrapping-Funktion oder den Benutzerausrüstungs-Bootstrapping-Dienst (130) an die Benutzerausrüstung (20) gesendet wird,
- in einem dritten Schritt wird die Nichtzugangsschicht-Endpunktinformation (141') verwendet, um den in Betracht gezogenen Nichtzugangsschicht-Sicherheitskontext einzurichten und/oder eine Authentifizierung der Benutzerausrüstung (20) in Bezug auf entweder die spezifische Netzfunktion oder den spezifischen Netzdienst (141) oder die spezifizierte Netzfunktion oder den spezifizierten Netzdienst, die bzw. der der spezifischen Art von Netzfunktionsfunktionalität entspricht, durchzuführen

2. Verfahren nach Anspruch 1, wobei, als Teil des Herstellens oder vor dem Herstellen des Nichtzugangsschicht-Sicherheitskontextes zwischen der Benutzerausrüstung (20) und der Benutzerausrüstungs-Bootstrapping-Funktion oder dem Benutzerausrüstungs-Bootstrapping-Dienst (130), die Benutzerausrüstung (20) eine anfängliche Nachricht an ein Zugangsnetz (110) oder einen Zugangsnetzknoten (111) des Telekommunikationsnetzes (100) sendet, wobei die anfängliche Nachricht durch das Zugangsnetz (110) oder den Zugangsnetzknoten (111) des Telekommunikationsnetzes (100) an die Benutzerausrüstungs-Bootstrapping-Funktion oder den Benutzerausrüstungs-Bootstrapping-Dienst (130), insbesondere auf der Grundlage von Informationen, die als Teil der anfänglichen Nachricht bereitgestellt werden, weitergeleitet wird.

3. Verfahren nach einem der vorangehenden Ansprüche, wobei, in dem ersten Schritt, ein Nichtzugangsschicht-Sicherheitskontext zwischen der Benutzerausrüstung (20) und einer weiteren Netzfunktion oder einem weiteren Netzdienst (142) hergestellt wird, wobei die weitere Netzfunktion oder der weitere Netzdienst (142) die Benutzerausrüstungs-Bootstrapping-Funktion oder den Benutzerausrüstungs-Bootstrapping-Dienst (130) umfasst oder darauf zugreift, wobei die Benutzerausrüstung (20) die in Betracht gezogene Nichtzugangsschicht-Kommunikationsverbindung - zu der spezifischen Netzfunktion oder dem spezifischen Netzdienst (141) oder der spezifischen Art von Netzfunktionsfunktionalität - mittels Senden einer Nichtzugangsschicht-Anforderungsnachricht an die weitere Netzfunktion oder den weiteren Netzdienst (142) anfordert, wobei die weitere Netzfunktion oder der weitere Netzdienst (142) von der Benutzerausrüstungs-Bootstrapping-Funktion oder dem Benutzerausrüstungs-Bootstrapping-Dienst (130) die Nichtzugangsschicht-Endpunktinformation (141') anfordert, wobei, in dem zweiten Schritt, die Nichtzugangsschicht-Endpunktinformation (141'), die sich auf die spezifische Netzfunktion oder den spezifischen Netzdienst (141) oder auf die spezifizierte Netzfunktion oder den spezifizierten Netzdienst, die bzw. der der spezifischen Art von Netzfunktionsfunktionalität entspricht, beziehen, durch die Benutzerausrüstungs-Bootstrapping-Funktion oder den Benutzerausrüstungs-Bootstrapping-Dienst (130) an die weitere Netzfunktion oder den weiteren Netzdienst (142) und von der weiteren Netzfunktion oder dem weiteren Netzdienst (142) an die Benutzerausrüstung (20) gesendet wird.

4. Verfahren nach einem der vorangehenden Ansprüche, wobei, insbesondere in dem dritten Schritt, die Nichtzugangsschicht-Endpunktinformation (141') durch die Benutzerausrüstung (20) verwendet wird, um den in Betracht gezogenen Nichtzugangsschicht-Sicherheitskontext herzustellen und/oder um eine Authentifizierung der Benutzerausrüstung (20) in Bezug auf die spezifische Netzfunktion oder den spezifischen Netzdienst (141) oder in Bezug auf die spezifizierte Netzfunktion oder den spezifizierten Netzdienst durchzuführen, wobei die Nichtzugangsschicht-Endpunktinformation (141') mindestens eines von Folgendem umfasst oder daraus besteht:
- eine IP-Adressinformation,
- eine Information, die in der Lage ist, auf eine IP-Adresse abgebildet zu werden, insbesondere ein vollständig qualifizierter Domänenname (FQDN), oder eine Information, die in der Lage ist, dafür verwendet zu werden, einen vollständig qualifizierten Domänennamen, insbesondere einen allgemein bekannten vollständig qualifizierten Domänennamen, zu konstruieren,
- eine Angabe, die auf Daten als Teil einer konfigurierten Liste zeigt,
- eine Angabe, die sich auf einen Standardvorgabewert, insbesondere einen vorkonfigurierten Standardvorgabewert oder einen allgemein bekannten Standardvorgabewert, bezieht,
- eine Netzfunktionskennung, insbesondere eine universell eindeutige Kennung.

5. Verfahren nach einem der vorangehenden Ansprüche, wobei - neben der in Betracht gezogenen Nichtzugangsschicht-Kommunikationsverbindung und dem in Betracht gezogenen Nichtzugangsschicht-Sicherheitskontext zwischen der Benutzerausrüstung (20) und der spezifischen Netzfunktion oder dem spezifischen Netzdienst (141) oder der spezifizierten Netzfunktion oder dem spezifizierten Netzdienst - eine weitere in Betracht gezogene Nichtzugangsschicht-Kommunikationsverbindung und ein weiterer in Betracht gezogener Nichtzugangsschicht-Sicherheitskontext zwischen der Benutzerausrüstung (20) und einer weiteren spezifischen Netzfunktion oder einem weiteren spezifischen Netzdienst (143, 241), insbesondere von einem weiteren Telekommunikationsnetz (200), erforderlich ist, insbesondere im Fall einer Roaming-Situation, in der die Benutzerausrüstung (20) mit dem weiteren Telekommunikationsnetz (200) verbunden ist oder darin roamt, wobei insbesondere verschiedene Schlüssel und/oder verschiedene Verschlüsselungsverfahren für den spezifischen Nichtzugangsschicht-Sicherheitskontext und den weiteren spezifischen Nichtzugangsschicht-Sicherheitskontext verwendet werden,
wobei insbesondere
- die spezifizierte oder spezifische Netzfunktion oder der spezifizierte oder spezifische Netzdienst (141) und die weitere spezifische Netzfunktion oder der weitere spezifische Netzdienst (143, 241) entsprechende Netzfunktionen oder Netzdienste, die insbesondere dieselbe Art von Netzfunktionsfunktionalitäten bereitstellen, des Telekommunikationsnetzes (100) bzw. des weiteren Telekommunikationsnetzes (200) sind, wobei insbesondere die in Betracht gezogene Nichtzugangsschicht-Kommunikationsverbindung und/oder der in Betracht gezogene Nichtzugangsschicht-Sicherheitskontext einerseits und die weitere in Betracht gezogene Nichtzugangsschicht-Kommunikationsverbindung und/oder der weitere in Betracht gezogene Nichtzugangsschicht-Sicherheitskontext andererseits in einer verschachtelten Weise realisiert werden, oder
- die spezifizierte oder spezifische Netzfunktion oder der spezifizierte oder spezifische Netzdienst (141) und die weitere spezifische Netzfunktion oder der weitere spezifische Netzdienst (143, 241) parallel durch die Benutzerausrüstung (20) verwendet werden und nicht-entsprechende Netzfunktionen oder Netzdienste sind, die die verschiedenen Arten von Netzfunktionsfunktionalitäten bereitstellen.

6. Verfahren nach einem der vorangehenden Ansprüche, wobei in Bezug auf Informationselemente und/oder -nachrichten, die durch die Benutzerausrüstung (20) in Richtung der spezifischen oder spezifizierten Netzfunktion oder des spezifischen oder spezifizierten Netzdienstes (141) oder der weiteren spezifischen Netzfunktion oder des weiteren spezifischen Netzdienstes (143, 241) gesendet werden, die jeweilige Nichtzugangsschicht-Endpunktinformation (141') in solchen durch die Benutzerausrüstung (20) gesendeten Informationselementen und/oder -nachrichten enthalten ist, wobei das Zugangsnetz (110) oder der Zugangsnetzknoten (111) des Telekommunikationsnetzes (100) die jeweilige Nichtzugangsschicht-Endpunktinformation (141') verwendet, um solche Informationselemente und/oder -nachrichten an ihren Zielort weiterzuleiten, wobei solche durch die Benutzerausrüstung (20) gesendeten Informationselemente und/oder -nachrichten insbesondere eine Zielinformation, die sich auf die spezifische oder spezifizierte Netzfunktion oder den spezifischen oder spezifizierten Netzdienst (141) oder die weitere spezifische Netzfunktion oder den weiteren spezifischen Netzdienst (143, 241) bezieht oder diese angibt, oder sowohl eine Quelleninformation, die sich auf die Benutzerausrüstung (20) bezieht oder diese angibt, als auch eine Zielinformation umfassen.

7. Verfahren nach einem der vorangehenden Ansprüche, wobei die Benutzerausrüstung (20) mit einer Nichtzugangsschicht-Endpunktinformation der Benutzerausrüstung (20), insbesondere in einem Teilnehmeridentitätsmodul, konfiguriert wird oder die Benutzerausrüstung (20) durch das Telekommunikationsnetz (100), insbesondere durch die Benutzerausrüstungs-Bootstrapping-Funktion oder den Benutzerausrüstungs-Bootstrapping-Dienst (130) oder bei Netzregistrierung, einer Nichtzugangsschicht-Endpunktinformation der Benutzerausrüstung (20) zugewiesen wird, wobei die Benutzerausrüstung (20) für eine Nichtzugangsschicht-Kommunikation unter Verwendung dieser Nichtzugangsschicht-Endpunktinformation erreichbar ist.

8. Verfahren nach einem der vorangehenden Ansprüche, wobei in Bezug auf Informationselemente und/oder -nachrichten, die durch die spezifische oder spezifizierte Netzfunktion oder den spezifischen oder spezifizierten Netzdienst (141) oder die weitere spezifische Netzfunktion oder den weiteren spezifischen Netzdienst (143, 241) in Richtung der Benutzerausrüstung (20) gesendet werden, die Nichtzugangsschicht-Endpunktinformation der Benutzerausrüstung (20) in solchen Informationselementen und/oder -nachrichten, die durch die spezifische oder spezifizierte Netzfunktion oder den spezifischen oder spezifizierten Netzdienst (141) oder die weitere spezifische Netzfunktion oder den weiteren spezifischen Netzdienst (143, 241) gesendet werden, enthalten ist, wobei das Zugangsnetz (110) oder der Zugangsnetzknoten (111) des Telekommunikationsnetzes (100) die Nichtzugangsschicht-Endpunktinformation der Benutzerausrüstung (20) verwendet, um solche Informationselemente und/oder -nachrichten an die Benutzerausrüstung (20) weiterzuleiten.

9. Verfahren nach einem der vorangehenden Ansprüche, wobei ein erstes Informationselement, das Teil des in Betracht gezogenen Nichtzugangsschicht-Sicherheitskontextes ist oder unter Verwendung des in Betracht gezogenen Nichtzugangsschicht-Sicherheitskontextes gesendet wird, in der Lage ist, durch ein zweites Informationselement, das Teil des weiteren in Betracht gezogenen Nichtzugangsschicht-Sicherheitskontextes ist oder unter Verwendung des weiteren in Betracht gezogenen Nichtzugangsschicht-Sicherheitskontextes gesendet wird, referenziert zu werden oder umgekehrt,
wobei das erste Informationselement oder das zweite Informationselement, falls es als eine Referenzierungsinformation verwendet wird, die das andere Informationselement referenziert, mindestens eines von Folgendem umfasst:
- eine Nichtzugangsschicht-Sicherheitskontext-Kennungsinformation für die referenzierte Nichtzugangsschicht-Kommunikationsverbindung oder den referenzierten Nichtzugangsschicht-Sicherheitskontext, wobei die Nichtzugangsschicht-Sicherheitskontext-Kennungsinformation insbesondere die Nichtzugangsschicht-Endpunktinformation (141') des referenzierten Nichtzugangsschicht-Sicherheitskontextes umfasst,
- eine Informationselement-Kennung des referenzierten Informationselements, wobei insbesondere das erste und das zweite Informationselement Informationen umfassen, die sich auf dieselbe Art von Netzfunktionsfunktionalitäten beziehen oder sich auf verschiedene Arten von Netzfunktionsfunktionalitäten beziehen, insbesondere auf Richtlinien- und Gebührenfunktionsfunktionalitäten und/oder auf Sitzungsmanagementfunktionsfunktionalitäten und/oder auf Zugangs- und Mobilitätsmanagementfunktionsfunktionalitäten.

10. Verfahren nach einem der vorangehenden Ansprüche, wobei in der Nichtzugangsschicht-Kommunikation, an der die Benutzerausrüstung (20) und sowohl die spezifische Netzfunktion oder der spezifische Netzdienst (141) als auch die weitere spezifische Netzfunktion oder der weitere spezifische Netzdienst (143, 241) beteiligt sind, mehrere verschiedene Nichtzugangsschicht-Sicherheitskontexte verwendet werden, insbesondere um Benutzerausrüstungsroutenauswahl-Richtlinienregeln zu senden, wobei insbesondere ein Informationselement oder ein Teil davon durch die spezifische Netzfunktion oder den spezifischen Netzdienst (141) oder die weitere spezifische Netzfunktion oder den weiteren spezifischen Netzdienst (143, 241) nur dann sichtbar und/oder decodierbar ist, falls das jeweilige Informationselement oder ein Teil davon Teil des jeweiligen Nichtzugangsschicht-Sicherheitskontextes ist.

11. Benutzerausrüstung (20) zum Herstellen einer Nichtzugangsschicht-Kommunikationsverbindung zwischen der Benutzerausrüstung (20) und einem aus mehreren Netzfunktionen oder Netzdiensten (140) eines Telekommunikationsnetzes (100), wobei die Nichtzugangsschicht-Kommunikationsverbindung das Herstellen eines Nichtzugangsschicht-Sicherheitskontextes zwischen der Benutzerausrüstung (20) und der einen aus den mehreren Netzfunktionen oder Netzdiensten (140) umfasst, wobei die mehreren Netzfunktionen oder Netzdienste (140) in der Lage sind, verschiedene Arten von Netzfunktionsfunktionalitäten bereitzustellen,
wobei die Benutzerausrüstung (20) so eingerichtet ist, dass zum Herstellen der Nichtzugangsschicht-Kommunikationsverbindung eine Benutzerausrüstungs-Bootstrapping-Funktion oder ein Benutzerausrüstungs-Bootstrapping-Dienst (130) verwendet wird,
**dadurch gekennzeichnet, dass** die Benutzerausrüstung (20), um eine in Betracht gezogene Nichtzugangsschicht-Kommunikationsverbindung und einen in Betracht gezogenen Nichtzugangsschicht-Sicherheitskontext unter Einbeziehung der Benutzerausrüstung (20) herzustellen, so eingerichtet ist, dass:
- nachdem ein Nichtzugangsschicht-Sicherheitskontext zwischen der Benutzerausrüstung (20) und der Benutzerausrüstungs-Bootstrapping-Funktion oder dem Benutzerausrüstungs-Bootstrapping-Dienst (130) eingerichtet ist, die Benutzerausrüstung (20) die in Betracht gezogene Nichtzugangsschicht-Kommunikationsverbindung zu einer spezifischen Netzfunktion oder einem spezifischen Netzdienst (141) oder einer spezifischen Art von herzustellender Netzfunktionsfunktionalität anfordert, wobei die Benutzerausrüstung (20) die in Betracht gezogene Nichtzugangsschicht-Kommunikationsverbindung mittels Senden einer Nichtzugangsschicht-Anforderungsnachricht an die Benutzerausrüstungs-Bootstrapping-Funktion oder den Benutzerausrüstungs-Bootstrapping-Dienst (130) anfordert,
- die Benutzerausrüstungs-Bootstrapping-Funktion oder der Benutzerausrüstungs-Bootstrapping-Dienst (130) eine Nichtzugangsschicht-Endpunktinformation (141') bezüglich der spezifischen Netzfunktion oder des spezifischen Netzdienstes (141) oder bezüglich einer spezifizierten Netzfunktion oder eines spezifizierten Netzdienstes, die bzw. der der spezifischen Art von Netzfunktionsfunktionalität entspricht, bereitstellt, wobei die Nichtzugangsschicht-Endpunktinformation (141'), die sich auf die spezifische Netzfunktion oder den spezifischen Netzdienst (141) oder auf die spezifizierte Netzfunktion oder den spezifizierten Netzdienst, die bzw. der der spezifischen Art von Netzfunktionsfunktionalität entspricht, bezieht, durch die Benutzerausrüstung (20) von der Benutzerausrüstungs-Bootstrapping-Funktion oder dem Benutzerausrüstungs-Bootstrapping-Dienst (130) empfangen wird,
- die Nichtzugangsschicht-Endpunktinformation (141') verwendet wird, um den in Betracht gezogenen Nichtzugangsschicht-Sicherheitskontext einzurichten und/oder eine Authentifizierung der Benutzerausrüstung (20) in Bezug auf entweder die spezifische Netzfunktion oder den spezifischen Netzdienst (141) oder die spezifizierte Netzfunktion oder den spezifizierten Netzdienst, die bzw. der der spezifischen Art von Netzfunktionsfunktionalität entspricht, durchzuführen.

12. Telekommunikationsnetz (100) zum Herstellen einer Nichtzugangsschicht-Kommunikationsverbindung zwischen einer Benutzerausrüstung (20) und einem aus mehreren Netzfunktionen oder Netzdiensten (140) des Telekommunikationsnetzes (100), wobei die Nichtzugangsschicht-Kommunikationsverbindung das Herstellen eines Nichtzugangsschicht-Sicherheitskontextes zwischen der Benutzerausrüstung (20) und der einen aus den mehreren Netzfunktionen oder Netzdiensten (140) umfasst, wobei die mehreren Netzfunktionen oder Netzdienste (140) in der Lage sind, verschiedene Arten von Netzfunktionsfunktionalitäten bereitzustellen,
wobei das Herstellen der Nichtzugangsschicht-Kommunikationsverbindung die Verwendung einer Benutzerausrüstungs-Bootstrapping-Funktion oder eines Benutzerausrüstungs-Bootstrapping-Dienstes (130) umfasst, wobei die Benutzerausrüstungs-Bootstrapping-Funktion oder der Benutzerausrüstungs-Bootstrapping-Dienst (130) ein Teil des Telekommunikationsnetzes (100) ist,
**dadurch gekennzeichnet, dass** das System oder Telekommunikationsnetz (100), um eine in Betracht gezogene Nichtzugangsschicht-Kommunikationsverbindung und einen in Betracht gezogenen Nichtzugangsschicht-Sicherheitskontext unter Einbeziehung der Benutzerausrüstung (20) herzustellen, so eingerichtet ist, dass:
- nachdem ein Nichtzugangsschicht-Sicherheitskontext zwischen der Benutzerausrüstung (20) und der Benutzerausrüstungs-Bootstrapping-Funktion oder dem Benutzerausrüstungs-Bootstrapping-Dienst (130) eingerichtet ist, die Benutzerausrüstungs-Bootstrapping-Funktion oder der Benutzerausrüstungs-Bootstrapping-Dienst (130) von der Benutzerausrüstung (20) eine Nichtzugangsschicht-Anforderungsnachricht empfängt, die die Herstellung der in Betracht gezogenen Nichtzugangsschicht-Kommunikationsverbindung zu einer spezifischen Netzfunktion oder einem spezifischen Netzdienst (141) oder einer spezifischen Art von Netzfunktionsfunktionalität anfordert,
- die Benutzerausrüstungs-Bootstrapping-Funktion oder der Benutzerausrüstungs-Bootstrapping-Dienst (130) eine Nichtzugangsschicht-Endpunktinformation (141') bezüglich der spezifischen Netzfunktion oder des spezifischen Netzdienstes (141) oder bezüglich einer spezifizierten Netzfunktion oder eines spezifizierten Netzdienstes, die bzw. der der spezifischen Art von Netzfunktionsfunktionalität entspricht, bereitstellt, wobei die Nichtzugangsschicht-Endpunktinformation (141'), die sich auf die spezifische Netzfunktion oder den spezifischen Netzdienst (141) oder auf die spezifizierte Netzfunktion oder den spezifizierten Netzdienst, die bzw. der der spezifischen Art von Netzfunktionsfunktionalität entspricht, bezieht, durch die Benutzerausrüstungs-Bootstrapping-Funktion oder den Benutzerausrüstungs-Bootstrapping-Dienst (130) an die Benutzerausrüstung (20) gesendet wird,
- die Nichtzugangsschicht-Endpunktinformation (141') verwendet wird, um den in Betracht gezogenen Nichtzugangsschicht-Sicherheitskontext einzurichten und/oder eine Authentifizierung der Benutzerausrüstung (20) in Bezug auf entweder die spezifische Netzfunktion oder den spezifischen Netzdienst (141) oder die spezifizierte Netzfunktion oder den spezifizierten Netzdienst, die bzw. der der spezifischen Art von Netzfunktionsfunktionalität entspricht, durchzuführen.

13. Benutzerausrüstungs-Bootstrapping-Funktion oder Benutzerausrüstungs-Bootstrapping-Dienst (130), als Teil eines Telekommunikationsnetzes (100) nach Anspruch 12, zum Herstellen einer Nichtzugangsschicht-Kommunikationsverbindung zwischen einer Benutzerausrüstung (20) und einem aus mehreren Netzfunktionen oder Netzdiensten (140) des Telekommunikationsnetzes (100), wobei die Nichtzugangsschicht-Kommunikationsverbindung das Herstellen eines Nichtzugangsschicht-Sicherheitskontextes zwischen der Benutzerausrüstung (20) und den mehreren Netzfunktionen oder Netzdiensten (140) umfasst, wobei die mehreren Netzfunktionen oder Netzdienste (140) in der Lage sind, verschiedene Arten von Netzfunktionsfunktionalitäten bereitzustellen,
wobei das Herstellen der Nichtzugangsschicht-Kommunikationsverbindung die Verwendung der Benutzerausrüstungs-Bootstrapping-Funktion oder des Benutzerausrüstungs-Bootstrapping-Dienstes (130) umfasst, wobei die Benutzerausrüstungs-Bootstrapping-Funktion oder der Benutzerausrüstungs-Bootstrapping-Dienst (130) entweder ein Teil des Telekommunikationsnetzes (100) ist oder über das Telekommunikationsnetz (100) oder durch einen Netzknoten desselben zugänglich ist,
**dadurch gekennzeichnet, dass** die Benutzerausrüstungs-Bootstrapping-Funktion oder der Benutzerausrüstungs-Bootstrapping-Dienst (130), um eine in Betracht gezogene Nichtzugangsschicht-Kommunikationsverbindung und einen in Betracht gezogenen Nichtzugangsschicht-Sicherheitskontext unter Einbeziehung der Benutzerausrüstung (20) herzustellen, so eingerichtet ist, dass:
- nachdem ein Nichtzugangsschicht-Sicherheitskontext zwischen der Benutzerausrüstung (20) und der Benutzerausrüstungs-Bootstrapping-Funktion oder dem Benutzerausrüstungs-Bootstrapping-Dienst (130) eingerichtet ist, die Benutzerausrüstungs-Bootstrapping-Funktion oder der Benutzerausrüstungs-Bootstrapping-Dienst (130) von der Benutzerausrüstung (20) eine Nichtzugangsschicht-Anforderungsnachricht empfängt, die die Herstellung der in Betracht gezogenen Nichtzugangsschicht-Kommunikationsverbindung zu einer spezifischen Netzfunktion oder einem spezifischen Netzdienst (141) oder einer spezifischen Art von Netzfunktionsfunktionalität anfordert,
- die Benutzerausrüstungs-Bootstrapping-Funktion oder der Benutzerausrüstungs-Bootstrapping-Dienst (130) eine Nichtzugangsschicht-Endpunktinformation (141') bezüglich der spezifischen Netzfunktion oder des spezifischen Netzdienstes (141) oder bezüglich einer spezifizierten Netzfunktion oder eines spezifizierten Netzdienstes, die bzw. der der spezifischen Art von Netzfunktionsfunktionalität entspricht, bereitstellt, wobei die Nichtzugangsschicht-Endpunktinformation (141'), die sich auf die spezifische Netzfunktion oder den spezifischen Netzdienst (141) oder auf die spezifizierte Netzfunktion oder den spezifizierten Netzdienst, die bzw. der der spezifischen Art von Netzfunktionsfunktionalität entspricht, bezieht, durch die Benutzerausrüstungs-Bootstrapping-Funktion oder den Benutzerausrüstungs-Bootstrapping-Dienst (130) an die Benutzerausrüstung (20) gesendet wird,
- die Nichtzugangsschicht-Endpunktinformation (141') verwendet wird, um den in Betracht gezogenen Nichtzugangsschicht-Sicherheitskontext einzurichten und/oder eine Authentifizierung der Benutzerausrüstung (20) in Bezug auf entweder die spezifische Netzfunktion oder den spezifischen Netzdienst (141) oder eine spezifizierte Netzfunktion oder einen spezifizierten Netzdienst, die bzw. der der spezifischen Art von Netzfunktionsfunktionalität entspricht, durchzuführen.

14. Programm, umfassend einen computerlesbaren Programmcode, der, wenn er auf einem Computer und/oder in einer Benutzerausrüstung (20) und/oder in einem Netzknoten eines Telekommunikationsnetzes (100), insbesondere einer Netzfunktion oder einem Netzdienst (140) und/oder einer Benutzerausrüstungs-Bootstrapping-Funktion oder einem Benutzerausrüstungs-Bootstrapping-Dienst (130), oder teilweise in der Benutzerausrüstung (20) und/oder teilweise in dem Netzknoten des Telekommunikationsnetzes (100), insbesondere der Netzfunktion oder dem Netzdienst (140) und/oder teilweise in der Benutzerausrüstungs-Bootstrapping-Funktion oder dem Benutzerausrüstungs-Bootstrapping-Dienst (130), ausgeführt wird, den Computer und/oder die Benutzerausrüstung (20) und/oder den Netzknoten des Telekommunikationsnetzes (100) veranlasst, ein Verfahren nach einem der Ansprüche 1 bis 10 durchzuführen.

15. Computerlesbares Medium, umfassend Instruktionen, die, wenn sie auf einem Computer und/oder in einer Benutzerausrüstung (20) und/oder in einem Netzknoten eines Telekommunikationsnetzes (100), insbesondere einer Netzfunktion oder einem Netzdienst (140) und/oder einer Benutzerausrüstungs-Bootstrapping-Funktion oder einem Benutzerausrüstungs-Bootstrapping-Dienst (130), oder teilweise in der Benutzerausrüstung (20) und/oder teilweise in dem Netzknoten des Telekommunikationsnetzes (100), insbesondere der Netzfunktion oder dem Netzdienst (140) und/oder teilweise in der Benutzerausrüstungs-Bootstrapping-Funktion oder dem Benutzerausrüstungs-Bootstrapping-Dienst (130), ausgeführt werden, den Computer und/oder die Benutzerausrüstung (20) und/oder den Netzknoten des Telekommunikationsnetzes (100) veranlassen, ein Verfahren nach einem der Ansprüche 1 bis 10 durchzuführen.

## Revendications

1. Procédé pour établir une liaison de communication de strate de non-accès entre un équipement d'utilisateur (20) et un parmi une pluralité de fonctions ou services de réseau (140) d'un réseau de télécommunications (100), dans lequel la liaison de communication de strate de non-accès comprend l'établissement d'un contexte de sécurité de strate de non-accès entre l'équipement d'utilisateur (20) et l'un parmi la pluralité de fonctions ou services de réseau (140), la pluralité de fonctions ou services de réseau (140) étant aptes à fournir différents types de fonctionnalités de fonction de réseau,
dans lequel l'établissement de la liaison de communication de strate de non-accès comprend l'utilisation d'une fonction ou d'un service d'amorçage d'équipement d'utilisateur (130), la fonction ou le service d'amorçage d'équipement d'utilisateur (130) étant soit une partie du réseau de télécommunications (100) soit accessible via le réseau de télécommunications (100) ou par un nœud de réseau de celui-ci,
**caractérisé en ce que**, afin d'établir une liaison de communication de strate de non-accès considérée et un contexte de sécurité de strate de non-accès considéré comprenant l'équipement utilisateur (20), le procédé comprend les étapes suivantes :
- dans une première étape, un contexte de sécurité de strate de non-accès est établi entre l'équipement d'utilisateur (20) et la fonction ou le service d'amorçage d'équipement d'utilisateur (130), dans lequel l'équipement d'utilisateur (20) demande la liaison de communication de strate de non-accès considérée à une fonction ou un service de réseau spécifique (141) ou un type spécifique de fonctionnalité de fonction de réseau à établir, dans lequel l'équipement d'utilisateur (20) demande la liaison de communication de strate de non-accès considérée au moyen d'une transmission d'un message de demande de strate de non-accès à la fonction ou au service d'amorçage d'équipement d'utilisateur (130),
- dans une deuxième étape, la fonction ou le service d'amorçage d'équipement d'utilisateur (130) fournit une information de point d'extrémité de strate de non-accès (141') concernant la fonction ou le service de réseau spécifique (141) ou concernant une fonction ou un service de réseau spécifié correspondant au type spécifique de fonctionnalité de fonction de réseau, dans lequel l'information de point d'extrémité de strate de non-accès (141'), en se référant à la fonction ou au service de réseau spécifique (141) ou à la fonction ou au service de réseau spécifié correspondant au type spécifique de fonctionnalité de fonction de réseau, est transmise, par la fonction ou le service d'amorçage d'équipement d'utilisateur (130), à l'équipement d'utilisateur (20),
- dans une troisième étape, l'information de point d'extrémité de strate de non-accès (141') est utilisée pour établir le contexte de sécurité de strate de non-accès considéré et/ou pour effectuer une authentification de l'équipement d'utilisateur (20) par rapport soit à la fonction ou au service de réseau spécifique (141), soit à la fonction ou au service de réseau spécifié correspondant au type spécifique de fonctionnalité de fonction de réseau.

2. Procédé selon la revendication 1, dans lequel, en tant que partie du contexte de sécurité de strate de non-accès ou avant que celui-ci soit établi entre l'équipement d'utilisateur (20) et la fonction ou le service d'amorçage d'équipement d'utilisateur (130), l'équipement d'utilisateur (20) transmet un message initial à un réseau d'accès (110) ou à un nœud de réseau d'accès (111) du réseau de télécommunications (100), dans lequel le message initial est transféré, par le réseau d'accès (110) ou le nœud de réseau d'accès (111) du réseau de télécommunications (100), à la fonction ou au service d'amorçage d'équipement d'utilisateur (130), en particulier sur la base d'informations fournies en tant que partie du message initial.

3. Procédé selon l'une des revendications précédentes, dans lequel, dans la première étape, un contexte de sécurité de strate de non-accès est établi entre l'équipement d'utilisateur (20) et une fonction ou un service de réseau supplémentaire (142), dans lequel la fonction ou le service de réseau supplémentaire (142) comprend ou accède à la fonction ou au service d'amorçage d'équipement d'utilisateur (130), dans lequel l'équipement d'utilisateur (20) demande la liaison de communication de strate de non-accès considérée - à la fonction ou au service de réseau spécifique (141) ou au type spécifique de fonctionnalité de fonction de réseau - au moyen d'une transmission d'un message de demande de strate de non-accès à la fonction ou au service de réseau supplémentaire (142), dans lequel la fonction ou le service de réseau supplémentaire (142) demande, à partir de la fonction ou du service d'amorçage d'équipement d'utilisateur (130), l'information de point d'extrémité de strate de non-accès (141'), dans lequel, dans la deuxième étape, l'information de point d'extrémité de strate de non-accès (141'), en se référant à la fonction ou au service de réseau spécifique (141) ou à la fonction ou au service de réseau spécifié correspondant au type spécifique de fonctionnalité de fonction de réseau, sont transmises, par la fonction ou le service d'amorçage d'équipement d'utilisateur (130) à la fonction ou au service de réseau supplémentaire (141), et depuis la fonction ou le service de réseau supplémentaire (142) à l'équipement d'utilisateur (20).

4. Procédé selon l'une des revendications précédentes, dans lequel, en particulier dans la troisième étape, l'information de point d'extrémité de strate de non-accès (141') est utilisée, par l'équipement d'utilisateur (20), pour établir le contexte de sécurité de strate de non-accès considéré et/ou pour effectuer une authentification de l'équipement d'utilisateur (20) par rapport à la fonction ou au service de réseau spécifique (141), soit par rapport à la fonction ou au service de réseau spécifié, dans lequel l'information de point d'extrémité de strate de non-accès (141') comprend au moins un des éléments suivants, ou est constituée de :
- une information d'adresse IP,
- une information qui peut être mappée à une adresse IP, en particulier un nom de domaine complet (FQDN) ou une information qui peut être utilisée pour construire un nom de domaine entièrement qualifié, en particulier un nom de domaine complet bien connu,
- une indication pointant vers des données en tant que partie d'une liste configurée,
- une indication se référant à une valeur par défaut, en particulier une valeur par défaut pré-configurée, ou une valeur par défaut bien connue,
- un identifiant de fonction de réseau, en particulier un identifiant universellement unique.

5. Procédé selon l'une des revendications précédentes, dans lequel - en plus de la liaison de communication de strate de non-accès considérée et du contexte de sécurité de strate de non-accès considéré entre l'équipement d'utilisateur (20) et la fonction ou le service de réseau spécifique (141) ou la fonction ou le service de réseau spécifique (141) - une liaison de communication de strate de non-accès considérée supplémentaire et un contexte de sécurité de strate de non-accès considéré supplémentaire entre l'équipement d'utilisateur (20) et une fonction ou un service de réseau spécifique supplémentaire (143, 241), en particulier d'un réseau de télécommunications supplémentaire (200), est requise, en particulier dans le cas d'une situation d'itinérance de l'équipement d'utilisateur (20) étant connecté au réseau de télécommunications supplémentaire (200) ou en itinérance à l'intérieur de celui-ci, dans lequel différentes clés et/ou différents procédés de chiffrement sont en particulier utilisés pour le contexte de sécurité de strate de non-accès spécifique et le contexte de sécurité de strate de non-accès spécifique supplémentaire,
dans lequel en particulier
- la fonction ou le service de réseau spécifié ou spécifique (141) et la fonction ou le service de réseau spécifique supplémentaire (143, 241) sont des fonctions ou services de réseau correspondants, en particulier fournissant le même type de fonctionnalités de fonction de réseau, du réseau de télécommunications (100), et du réseau de télécommunications supplémentaire (200), respectivement, dans lequel la liaison de communication de strate de non-accès considérée et/ou le contexte de sécurité de strate de non-accès considéré, d'une part, et la liaison de communication de strate de non-accès considérée supplémentaire et/ou le contexte de sécurité de strate de non-accès considéré supplémentaire, d'autre part, sont en particulier réalisés d'une manière imbriquée, ou
- la fonction ou le service de réseau spécifié ou spécifique (141) et la fonction ou le service de réseau spécifique supplémentaire (143, 241) sont utilisés en parallèle par l'équipement d'utilisateur (20) et sont des fonctions ou services de réseau non correspondants, fournissant les différents types de fonctionnalités de fonction de réseau.

6. Procédé selon l'une des revendications précédentes, dans lequel, en ce qui concerne des éléments d'information et/ou des messages envoyés par l'équipement d'utilisateur (20) vers la fonction ou le service de réseau spécifique ou spécifié (141) ou la fonction ou le service de réseau spécifique supplémentaire (143, 241), l'information de point d'extrémité de strate de non-accès (141') respective est incluse dans de tels éléments d'information et/ou messages envoyés par l'équipement d'utilisateur (20), dans lequel le réseau d'accès (110) ou le nœud de réseau d'accès (111) du réseau de télécommunications (100) utilise l'information de point d'extrémité de strate de non-accès (141') respective pour transférer de tels éléments d'information et/ou messages à leur destination, dans lequel de tels éléments d'information et/ou messages envoyés par l'équipement d'utilisateur (20) comprennent en particulier une information de destination, indiquant ou se référant à la fonction ou au service de réseau spécifique ou spécifié (141) ou à la fonction ou au service de réseau spécifique supplémentaire (143, 241) ou à la fois une information de source, indiquant ou se référant à l'équipement d'utilisateur (20) et une information de destination.

7. Procédé selon l'une des revendications précédentes, dans lequel l'équipement d'utilisateur (20) est configuré avec une information de point d'extrémité de strate de non-accès de l'équipement d'utilisateur (20), en particulier dans un module d'identité d'abonné ou l'équipement d'utilisateur (20) est assigné, par le réseau de télécommunications (100), en particulier par la fonction ou le service d'amorçage d'équipement d'utilisateur (130) ou sur un enregistrement de réseau, à une information de point d'extrémité de strate de non-accès de l'équipement d'utilisateur (20), dans lequel l'équipement d'utilisateur (20) est accessible, pour une communication de strate de non-accès, en utilisant cette information de point d'extrémité de strate de non-accès.

8. Procédé selon l'une des revendications précédentes, dans lequel, pour ce qui concerne des éléments d'information et/ou des messages envoyés par la fonction ou le service de réseau spécifique ou spécifié (141) ou la fonction ou le service de réseau spécifique supplémentaire (143, 241) vers l'équipement d'utilisateur (20), l'information de point d'extrémité de strate de non-accès de l'équipement d'utilisateur (20) est incluse dans de tels éléments d'information et/ou messages envoyés par la fonction ou le service de réseau spécifique ou spécifié (141) ou la fonction ou le service de réseau spécifique supplémentaire (143, 241), dans lequel le réseau d'accès (110) ou le nœud de réseau d'accès (111) du réseau de télécommunications (100) utilise l'information de point d'extrémité de strate de non-accès de l'équipement d'utilisateur (20) pour transférer de tels éléments d'information et/ou messages à l'équipement d'utilisateur (20).

9. Procédé selon l'une des revendications précédentes, dans lequel un premier élément d'information du contexte de sécurité de strate de non-accès considéré ou transmis en utilisant celui-ci peut être référencé par un second élément d'information du contexte de sécurité de strate de non-accès considéré supplémentaire ou peut être transmis en utilisant celui-ci, ou vice versa,
dans lequel le premier élément d'information ou le second élément d'information, s'il est utilisé comme une information de référencement, référençant l'autre élément d'information, comprend au moins un des éléments suivants :
- une information d'identifiant de contexte de sécurité de strate de non-accès pour la liaison de communication de strate de non-accès référencée ou le contexte de sécurité de strate de non-accès référencé, dans lequel l'information d'identifiant de contexte de sécurité de strate de non-accès comprend en particulier l'information de point d'extrémité de strate de non-accès (141') du contexte de sécurité de strate de non-accès référencé,
- un identifiant d'élément d'information de l'élément d'information référencé, dans lequel les premier et second éléments d'information comprennent en particulier des informations associées au même type de fonctionnalités de fonction de réseau, ou associées à différents types de fonctionnalités de fonction de réseau, en particulier à des fonctionnalités de fonction de politique et de charge et/ou des fonctionnalités de fonction de gestion de session et/ou à des fonctionnalités de fonctions de gestion d'accès et de mobilité.

10. Procédé selon l'une des revendications précédentes, dans lequel dans la communication de strate de non-accès comprenant l'équipement d'utilisateur (20) et à la fois la fonction ou le service de réseau spécifique (141) et la fonction ou le service de réseau spécifique supplémentaire (143, 241), une pluralité de différents contextes de sécurité de strate de non-accès sont utilisés, en particulier afin de transmettre des règles de politique de sélection de routage d'équipement d'utilisateur, dans lequel un élément d'information, ou une partie de celui-ci, est en particulier visible et/ou décodable par la fonction ou le service de réseau spécifique (141) ou la fonction ou le service de réseau spécifique supplémentaire (143, 241) uniquement dans le cas où l'élément d'information respectif, ou une partie de celui-ci, est une partie du contexte de sécurité de strate de non-accès respectif.

11. Équipement d'utilisateur (20) pour établir une liaison de communication de strate de non-accès entre un équipement d'utilisateur (20) et un parmi une pluralité de fonctions ou services de réseau (140) d'un réseau de télécommunications (100), dans lequel la liaison de communication de strate de non-accès comprend l'établissement d'un contexte de sécurité de strate de non-accès entre l'équipement d'utilisateur (20) et l'un parmi la pluralité de fonctions ou services de réseau (140), la pluralité de fonctions ou services de réseau (140) étant aptes à fournir différents types de fonctionnalités de fonction de réseau,
dans lequel l'équipement d'utilisateur (20) est configuré de telle sorte que pour établir la liaison de communication de strate de non-accès, une fonction ou un service d'amorçage d'équipement d'utilisateur (130) est utilisé,
**caractérisé en ce que**, afin d'établir une liaison de communication de strate de non-accès considérée et un contexte de sécurité de strate de non-accès considéré comprenant l'équipement d'utilisateur (20), l'équipement d'utilisateur (20) est configuré de telle sorte que :
- après qu'un contexte de sécurité de strate de non-accès est établi entre l'équipement d'utilisateur (20) et la fonction ou le service d'amorçage d'équipement d'utilisateur (130), l'équipement d'utilisateur (20) demande la liaison de communication de strate de non-accès considérée à une fonction ou un service de réseau spécifique (141) ou un type spécifique de fonctionnalité de fonction de réseau à établir, dans lequel l'équipement d'utilisateur (20) demande la liaison de communication de strate de non-accès considérée au moyen d'une transmission d'un message de demande de strate de non-accès à la fonction ou au service d'amorçage d'équipement d'utilisateur (130),
- la fonction ou le service d'amorçage d'équipement d'utilisateur (130) fournit une information de point d'extrémité de strate de non-accès (141') concernant la fonction ou le service de réseau spécifique (141) ou concernant une fonction ou un service de réseau spécifié correspondant au type spécifique de fonctionnalité de fonction de réseau, dans lequel l'information de point d'extrémité de strate de non-accès (141'), en se référant à la fonction ou au service de réseau spécifique (141) ou à la fonction ou au service de réseau spécifié correspondant au type spécifique de fonctionnalité de fonction de réseau, est reçue par l'équipement d'utilisateur (120), en provenance de la fonction ou du service d'amorçage d'équipement d'utilisateur (130),
- l'information de point d'extrémité de strate de non-accès (141') est utilisée pour établir le contexte de sécurité de strate de non-accès considéré et/ou pour effectuer une authentification de l'équipement d'utilisateur (20) par rapport soit à la fonction ou au service de réseau spécifique (141), soit à la fonction ou au service de réseau spécifié correspondant au type spécifique de fonctionnalité de fonction de réseau.

12. Réseau de télécommunications (100) pour établir une liaison de communication de strate de non-accès entre un équipement d'utilisateur (20) et un parmi une pluralité de fonctions ou services de réseau (140) du réseau de télécommunications (100), dans lequel la liaison de communication de strate de non-accès comprend l'établissement d'un contexte de sécurité de strate de non-accès entre l'équipement d'utilisateur (20) et l'un parmi la pluralité de fonctions ou services de réseau (140), la pluralité de fonctions ou services de réseau (140) étant aptes à fournir différents types de fonctionnalités de fonction de réseau,
dans lequel l'établissement de la liaison de communication de strate de non-accès comprend l'utilisation d'une fonction ou d'un service d'amorçage d'équipement d'utilisateur (130), la fonction ou le service d'amorçage d'équipement d'utilisateur (130) étant une partie du réseau de communication (100),
**caractérisé en ce que**, afin d'établir une liaison de communication de strate de non-accès considérée et un contexte de sécurité de strate de non-accès considéré comprenant l'équipement d'utilisateur (20), le système ou le réseau de télécommunications (100) est configuré de telle sorte que :
- après qu'un contexte de sécurité de strate de non-accès est établi entre l'équipement d'utilisateur (20) et la fonction ou le service d'amorçage d'équipement d'utilisateur (130), la fonction ou le service d'amorçage d'équipement d'utilisateur (130) reçoit de l'équipement d'utilisateur (20) un message de demande de strate de non-accès demandant l'établissement de la liaison de communication de strate de non-accès considérée à une fonction ou un service de réseau spécifique (141) ou un type spécifique de fonctionnalité de fonction de réseau,
- la fonction ou le service d'amorçage d'équipement d'utilisateur (130) fournit une information de point d'extrémité de strate de non-accès (141') concernant la fonction ou le service de réseau spécifique (141) ou concernant la fonction ou le service de réseau spécifié correspondant au type spécifique de fonctionnalité de fonction de réseau, dans lequel l'information de point d'extrémité de strate de non-accès (141'), en se référant à la fonction ou au service de réseau spécifique (141) ou à la fonction ou au service de réseau spécifié correspondant au type spécifique de fonctionnalité de fonction de réseau, est transmise, par la fonction ou le service d'amorçage d'équipement d'utilisateur (130), à l'équipement d'utilisateur (20),
- l'information de point d'extrémité de strate de non-accès (141') est utilisée pour établir le contexte de sécurité de strate de non-accès considéré et/ou pour effectuer une authentification de l'équipement d'utilisateur (20) par rapport soit à la fonction ou au service de réseau spécifique (141), soit à la fonction ou au service de réseau spécifié correspondant au type spécifique de fonctionnalité de fonction de réseau.

13. Fonction ou service d'amorçage d'équipement d'utilisateur (130), en tant que partie d'un réseau de télécommunications (100) selon la revendication 12, pour établir une liaison de communication de strate de non-accès entre un équipement d'utilisateur (20) et un parmi une pluralité de fonctions ou services de réseau (140) du réseau de télécommunications (100), dans lequel la liaison de communication de strate de non-accès comprend l'établissement d'un contexte de sécurité de strate de non-accès entre l'équipement d'utilisateur (20) et la pluralité de fonctions ou services de réseau (140), la pluralité de fonctions ou services de réseau (140) étant aptes à fournir différents types de fonctionnalités de fonction de réseau, dans lequel l'établissement de la liaison de communication de strate de non-accès comprend l'utilisation de la fonction ou du service d'amorçage d'équipement d'utilisateur (130), la fonction ou le service d'amorçage d'équipement d'utilisateur (130) étant soit une partie du réseau de télécommunications (100), soit accessible via le réseau de télécommunications (100) ou par un nœud de réseau de celui-ci, **caractérisé en ce que**, afin d'établir une liaison de communication de strate de non-accès considérée et un contexte de sécurité de strate de non-accès considéré comprenant l'équipement d'utilisateur (20), la fonction ou le service d'amorçage d'équipement d'utilisateur (130) est configuré de telle sorte que :
- après qu'un contexte de sécurité de strate de non-accès est établi entre l'équipement d'utilisateur (20) et la fonction ou le service d'amorçage d'équipement d'utilisateur (130), la fonction ou le service d'amorçage d'équipement d'utilisateur (130) reçoit de l'équipement d'utilisateur (20) un message de demande de strate de non-accès demandant l'établissement de la liaison de communication de strate de non-accès considérée à une fonction ou un service de réseau spécifique (141) ou un type spécifique de fonctionnalité de fonction de réseau,
- la fonction ou le service d'amorçage d'équipement d'utilisateur (130) fournit une information de point d'extrémité de strate de non-accès (141') concernant la fonction ou le service de réseau spécifique (141) ou concernant la fonction ou le service de réseau spécifié correspondant au type spécifique de fonctionnalité de fonction de réseau, dans lequel l'information de point d'extrémité de strate de non-accès (141'), en se référant à la fonction ou au service de réseau spécifique (141) ou à la fonction ou au service de réseau spécifié correspondant au type spécifique de fonctionnalité de fonction de réseau, est transmise, par la fonction ou le service d'amorçage d'équipement d'utilisateur (130), à l'équipement d'utilisateur (20),
- l'information de point d'extrémité de strate de non-accès (141') est utilisée pour établir le contexte de sécurité de strate de non-accès considéré et/ou pour effectuer une authentification de l'équipement d'utilisateur (20) par rapport soit à la fonction ou au service de réseau spécifique (141), soit à une fonction ou un service de réseau spécifié correspondant au type spécifique de fonctionnalité de fonction de réseau.

14. Programme comprenant un code de programme lisible par ordinateur qui, lorsqu'il est exécuté sur un ordinateur et/ou sur un équipement d'utilisateur (20) et/ou sur un nœud de réseau d'un réseau de télécommunications (100), en particulier une fonction ou un service de réseau (140) et/ou une fonction ou un service d'amorçage d'équipement d'utilisateur (130), ou en partie sur l'équipement d'utilisateur (20) et/ou en partie sur le nœud de réseau du réseau de télécommunications (100), en particulier la fonction ou le service de réseau (140) et/ou en partie sur la fonction ou le service d'amorçage d'équipement d'utilisateur (130), amène l'ordinateur et/ou l'équipement d'utilisateur (20) et/ou le nœud de réseau du réseau de télécommunications (100) à mettre en œuvre un procédé selon l'une des revendications 1 à 10.

15. Support lisible par ordinateur comprenant des instructions qui, lorsqu'elles sont exécutées sur un ordinateur et/ou sur un équipement d'utilisateur (20) et/ou sur un nœud de réseau d'un réseau de télécommunications (100), en particulier une fonction ou un service de réseau (140) et/ou une fonction ou un service d'amorçage d'équipement utilisateur (130), ou en partie sur l'équipement d'utilisateur (20) et/ou en partie sur le nœud de réseau du réseau de télécommunications (100), en particulier la fonction ou le service de réseau (140) et/ou en partie sur la fonction ou le service d'amorçage d'équipement d'utilisateur (130), amènent l'ordinateur et/ou l'équipement d'utilisateur (20) et/ou le nœud de réseau du réseau de télécommunications (100) à mettre en œuvre un procédé selon l'une des revendications 1 à 10.
